# EUROPEAN PATENT SPECIFICATION

(11) **EP 4 361 046 B1**
(45) Date of publication and mention of the grant of the patent: **06.05.2026**
(21) Application number: 22866665.7
(22) Date of filing: 07.09.2022
(51) Int. Cl.: B64F 1/32, B65G 43/00, B65G 43/08, B65G 69/22, E06C 5/04, E06C 7/02, B66F 17/00

(54) **AUTOMATIC LEVELING DEVICE FOR CONVEYING PLATFORM, AND LOADER**
AUTOMATISCHE NIVELLIERUNGSVORRICHTUNG FÜR EINE FÖRDERPLATTFORM UND LADER
DISPOSITIF DE MISE À NIVEAU AUTOMATIQUE POUR UNE PLATE-FORME DE TRANSPORT, ET CHARGEUR

(30) Priority: 10.09.2021 CN 202111060958; 05.09.2022 CN 202222351986 U; 05.09.2022 CN 202222353218 U; 05.09.2022 CN 202222351979 U
(43) Date of publication of application: 01.05.2024
(73) Proprietor: Weihai Guangtai Airport Equipment Co., Ltd., Weihai, Shandong 264200 (CN)
(72) Inventor: ZANG, Youjun, Weihai, Shandong 264200 (CN); YU, Junbo, Weihai, Shandong 264200 (CN); LI, Yuehua, Weihai, Shandong 264200 (CN); LIU, Haitao, Weihai, Shandong 264200 (CN); LIU, Yujun, Weihai, Shandong 264200 (CN); ZHENG, Fei, Weihai, Shandong 264200 (CN)
(74) Representative: JD&P Patent Attorneys Joanna Dargiewicz & Partners
(86) International application number: PCT/CN2022/117636
(87) International publication number: WO 2023/036202

(56) References cited:
- WO-A1-2011/142835
- CN-A- 109 969 424
- CN-A- 113 753 254
- CN-U- 204 457 407
- CN-U- 208 963 336
- CN-U- 214 511 693
- CN-U- 215 794 518
- CN-Y- 201 390 528
- DE-A1- 3 821 246
- US-A- 3 666 127
- US-A- 4 304 518
- US-A- 4 886 413
- US-A- 4 886 413

## Description

### TECHNICAL FIELD

The present invention relates to the technical field of airport ground equipment, and particularly to an automatic leveling device for the conveying platform and a loader.

### BACKGROUND OF THE PRESENT INVENTION

Container cargo loaders are widely used in major airports. The existing loader generally comprises a chassis, a vehicle PLC controller, a lithium battery power device and a drive motor. The vehicle PLC controller is used to control operation of an electric airport container cargo loader. The chassis is connected with a front axle and a conveying platform which comprises a main platform and a bridge platform. The main platform is provided with a conveying motor, a chain, a conveying roller and a motor controller. The bridge platform is provided with a conveying motor, a chain, a conveying roller and a motor controller. The main platform is docked with the bridge platform to complete cargo conveying. China patent CN214059744U discloses an electric aircraft container lifting platform vehicle, which comprises a frame, an operating board, a main platform, a bridge platform and a power part. The power part comprises a battery compartment, a main motor, a regenerative motor, a drive motor, a first hydraulic pump, a second auxiliary hydraulic pump, a hydraulic motor and an inverter; the main platform and the bridge platform are respectively provided with a crawler belt and a universal wheel; the bridge platform is fixedly provided with the operating board; the frame is connected with the main platform through a first lifting mechanism; the frame is connected with the bridge platform through a second lifting mechanism; the first lifting mechanism drives the bridge platform to move up and down; and the second lifting mechanism drives the bridge platform to move up and down. When in use, the first lifting mechanism of the main platform lifts the main platform to the same height as the bridge platform, and docks the main platform with the bridge platform, thus realizing cargo conveying. The above patent has the following shortcomings compared with the prior art. 1. The main platform and the bridge platform may be docked only after being lifted to the same height through the lifting mechanism, but the heights of the main platform and the bridge platform needs to be adjusted many times to be the same, which is time-consuming and laborious, and indirectly leads to the low cargo conveying velocity. 2. When the heights of the main platform and the bridge platform are inconsistent, the cargo conveying will be easily stuck, which will affect the conveying efficiency and may even throw the cargo out. 3. If there is no limit during the lifting of the main platform, the rising velocity is too fast, and the main platform may overturn the bridge platform and hit a plane. 4. The operating board in the above patent is arranged on one side of the bridge platform, which causes a center of gravity of the bridge platform to shift, and is easy to tilt to the operating board side, and even has the risk of rollover. 5. There is no elevator in the above-mentioned patent; when the bridge platform rises, an operator cannot get off the operating board or enter the bridge platform, and the operator can only get in and out of the operating board or the bridge platform when the bridge platform falls completely, but there may be problems when the cargoes are docked, which requires the operator to check in time, and is very inconvenient. 6. A fixed guardrail is usually installed on the bridge platform to prevent the cargo from slipping out from the side far away from the operating board; however, the existing fixed guardrail lacks a detection mechanism, and the operator occasionally forgets that the guardrail does not rotate to a rear of the bridge platform, and the loader starts to run; when the loader is docked with a plane or other equipment, the guardrail is easy to hit the plane or other equipment, which is unsafe to operate. 7. When the bridge platform is docked with the main platform for cargo conveying, the bridge platform may swing left and right, resulting in unstable cargo conveying, and it may be necessary to adjust the cargo several times.

D1 (US 4 886 413 A) discloses interface control for controlling the altitude of two roll planes (14,18) of a deck surface relative to each other and providing cooperation with a stop (46,48) that precludes the lowering of one of the roll planes when a load is in position on the deck surface.

D2 (US 3 666 127 A) discloses an aircraft cargo-handling vehicle has an elevatable platform adapted to be raised approximately to the level of the sill of the aircraft cargo door, said platform being provided with a transfer bridge so connected to the platform that it can be extended from the platform to the aircraft sill for supporting the forward end of the platform during the loading and unloading operation.

D3 (US4 304 518 A) discloses an aircraft loader having bridge and main elevators is provided with pivotally mounted trays at the rearward end of the bridge elevator. The trays serve as transit means for the passage of load units between the two elevators both when the two elevators are level and when they are out of level to a degree. The trays function also as part of a level control system whereby the levels of the main elevator and trays tend to be adjusted to match the level of the bridge elevator.

### SUMMARY OF THE PRESENT INVENTION

In order to overcome the defects in the prior art, the present invention aims at providing an automatic leveling device for a conveying platform and a loader, wherein a main platform and a bridge platform have the same docking height and are stably docked, the bridge platform is free from side tilting, rotation of a guardrail is provided with detection, and an elevator is stable to step on.

The invention is set out in the appended set of claims.

In order to achieve the above objects, the technical solutions adopted by the present invention are as follows:
According to the invention, the present disclosure provides a loader as defined in claim 1. An automatic leveling device for a conveying platform comprises a main platform and a bridge platform, wherein an automatic leveling mechanism is arranged between the main platform and the bridge platform, the automatic leveling mechanism comprises a baffle, a supporting plate, a low-level sensor and an aligning sensor, at least one baffle is arranged between the main platform and the bridge platform, a supporting plate is arranged on the main platform, one end of the supporting plate is fixedly connected with the main platform, the other end of the supporting plate is exposed from the main platform and placed below the baffle, the baffle is hinged with the bridge platform, two ends of the baffle are free ends, one end of the baffle faces the supporting plate and is fixedly provided with the low-level sensor, the aligning sensor is arranged between the other end of the baffle and the bridge platform, one end of the aligning sensor is fixedly connected with the bridge platform, and the other end of the aligning sensor is arranged at interval with the baffle, so that when the supporting plate contacts the low-level sensor on the baffle in use as the main platform rises, the low-level sensor can sense the supporting plate, and a rising velocity of the main platform can be reduced through a loader control system, such that the rising velocity of the main platform is switched from fast to slow, one end of the supporting plate supporting the baffle rotates upwards, and the other end of the baffle rotates downwards; when the aligning sensor senses the baffle, the loader control system controls the main platform to stop rising, so that the main platform and the bridge platform are flush, the adjustment is convenient, and cargos are conveyed stably.

One side of the aligning sensor according to the present invention is provided with a following sensor, one end of the following sensor is fixedly connected with the bridge platform, the other end of the following sensor faces the baffle, and a height of the following sensor is higher than a height of the aligning sensor, so that when in use, as the main platform rises, when the supporting plate touches the low-level sensor on the baffle, the low-level sensor senses the supporting plate, and the rising velocity of the main platform is reduced by the loader control system, such that the rising velocity of the main platform is switched from fast to slow. The supporting plate supports one end of the baffle to rotate upwards and the other end of the baffle to rotate downwards. When the following sensor senses the baffle, the loader control system controls the main platform to follow the bridge platform up and down until the main platform is flush with the bridge platform.

One side of the aligning sensor according to the present invention is provided with a high-level sensor, one end of the high-level sensor is fixedly connected with the bridge platform, the other end of the following sensor faces the baffle, and a height of the high-level sensor is lower than the height of the aligning sensor, so that when in use, when the aligning sensor fails, the main platform continues to rise, the supporting plate supports one end of the baffle to continue to rotate upwards and the other end of the baffle to rotate downwards, the high-level sensor touches the baffle, and the loader control system controls the main platform to descend instead of rising.

One side of the aligning sensor according to the present invention is provided with an ultra-high shutdown protection sensor, one end of the ultra-high shutdown protection sensor is fixedly connected with the bridge platform, the other end of the ultra-high shutdown protection sensor faces the baffle, and a height of the ultra-high shutdown protection sensor is lower than the height of the aligning sensor, so that when in use, when the baffle or other sensor on the bridge platform fails, the main platform continues to rise, the supporting plate supports one end of the baffle to continue to rotate upwards and the other end of the baffle to rotate downwards, the ultra-high shutdown protection sensor senses the baffle, the loader control system cuts off the power and the main platform stops rising.

One side of the aligning sensor according to the present invention is provided with a baffle lowering sensor, one end of the baffle lowering sensor is fixedly connected with the bridge platform, the other end of the baffle lowering sensor faces the baffle, and a height of the baffle lowering sensor is higher than the height of the aligning sensor, so that a position of the baffle can be detected by the baffle lowering sensor, and the baffle can be confirmed to be in a state of being lifted and rotated by the supporting plate.

A loader, comprises a chassis and a vehicle PLC controller, wherein the chassis is provided with the automatic leveling device for the conveying platform above, the main platform and the bridge platform are respectively connected with the chassis through a lifting mechanism, the low-level sensor, the aligning sensor, the high-level sensor, the following sensor, the ultra-high shutdown protection sensor, the baffle lowering sensor and the lifting mechanism are respectively connected with the vehicle PLC controller, so that when the loader is docked with an airplane, cargo can be quickly conveyed after leveling by the automatic leveling device for the conveying platform.

The main platform according to the present invention is provided with a conveying motor, a chain, a chain wheel, a conveying roller, a roller shaft and a motor controller, the bridge platform is provided with a conveying motor, a chain, a chain wheel, a conveying roller, a roller shaft and a motor controller, the main platform and the bridge platform are respectively provided with a roller shaft at intervals, two ends of the roller shaft are fixedly connected with the main platform or the bridge platform through a bearing, the conveying roller is mounted on the roller shaft, an output shaft of the conveying motor is connected with the roller shaft through the chain and the chain wheel, the conveying motor is connected with the motor controller, the conveying motor and the motor controller are fixed on the main platform or the bridge platform, and the motor controller is connected with the vehicle PLC controller, so as to realize forward, backward, left, right and 360-degree rotation of the cargo.

One side of the bridge platform according to the present invention is provided with an operating board, and the other side of the bridge platform is provided with a bridge platform side-tilting prevention mechanism, the bridge platform side-tilting prevention mechanism comprises a hook and a guide supporting plate, the hook is arranged below the other side of the bridge platform, a lower end of the hook is hinged with a roller shaft of the lifting mechanism at a lower end of the bridge platform, an upper part of the hook is provided with a guide supporting plate facing the roller shaft, an upper end of the guide supporting plate is butted against and slidably connected with the hook, and the guide supporting plate is fixedly connected with the bridge platform, so that during a lifting process of the bridge platform, the hook moves on the guide supporting plate due to the movement of the roller shaft, and the hook is always hung on the guide supporting plate, such that the side of the bridge platform far away from the operating board may not be tilted, thereby realizing the balance of the whole bridge platform.

The hook according to the present invention comprises a connecting block and a sliding pole, an upper end of the connecting block is provided with the sliding pole, a lower end of the connecting block is hinged with the roller shaft, one end of the sliding pole is fixedly connected with the connecting block, the other end of the sliding pole is draped on an upper end face of the guide supporting plate, and the sliding pole is slidably connected with the guide supporting plate, so as to be hung on the guide supporting plate through the slide bar, the lower end of the connecting block is hinged with the roller shaft, while the connecting block and the slide bar form the hook to hook the guide supporting plate at all times, so that the side bridge platform connected with the guide supporting plate is downward and does not incline.

One side of the bridge platform according to the present invention is provided with an elevator, the elevator comprises an upper ladder, a floating ladder and a lower ladder, the upper ladder is fixedly connected with the bridge platform, two sides of a lower part of the upper ladder are respectively provided with a hanging plate, the hanging plate is fixedly connected with the upper ladder, and a hanging groove with an upward opening is formed between the hanging plate and the upper ladder, two sides of a lower end of the upper ladder are respectively provided with a pressing block, the pressing block is located below the hanging plate, one end of the pressing block is fixedly connected with the upper ladder, the other end of the pressing block is arranged outside the upper ladder to form a pressing end, one side of the upper ladder far from the bridge platform is provided with the floating ladder and the lower ladder at intervals, the lower ladder is fixedly connected with the chassis, ladder slideways are fixedly arranged on both sides of an upper part of the lower ladder, the floating ladder is located between the upper ladder and the lower ladder, the floating ladder is slidably connected with the lower ladder through the ladder slideways, two sides of an upper end of the floating ladder are respectively provided with a clamping hook plate, two sides of a lower end of the floating ladder are respectively provided with a stopping block, one end of the clamping hook plate is fixedly connected with the floating ladder, the other end of the clamping hook plate extends to a direction of the upward to form a hanging end, the clamping hook plate is clamped into the hanging groove to connect the floating ladder with the upper ladder, one end of the stopping block is fixedly connected with the floating ladder, the other end of the stopping block extends to the direction of the upper ladder to form a bearing end, the upper ladder is downward, and the pressing block is pressed on the stopping block to drive the floating ladder to descend. The upper ladder and the floating ladder can ascend and descend as the bridge platform ascends and descends which can ascend and descend smoothly, have stable structure and do not shake.

A fixed mounting frame is arranged between the upper ladder and the bridge platform according to the present invention, one end of the fixed mounting frame is fixedly connected with the upper ladder, the other end of the fixed mounting frame is fixedly connected with the bridge platform, two sides of the lower ladder are respectively provided with a fixed supporting frame, one end of the fixed supporting frame is fixedly connected with the lower ladder and the other end of the fixed supporting frame is fixedly connected with the chassis, so that mounting stability of the upper ladder and the lower ladder can be improved through the fixed mounting frame and the fixed supporting frame.

The clamping hook plate according to the present invention is provided with a downward opening clamping groove, an open end of the clamping groove opens outwards to form a guide groove, and an opening angle of the guide groove is larger than an opening angle of the clamping groove, so that the clamping hook plate and the hanging plate can be conveniently butted, the clamping hook plate is clamped into the hanging groove, and the hanging plate enters the clamping groove, so that the hanging is stable and the floating ladder ascends smoothly.

Two sides of a lower end of the lower ladder according to the present invention are respectively provided with a mounting plate, one end of the mounting plate is fixedly connected with the lower ladder, and the other end of the mounting plate is fixedly connected with the chassis, so as to further improve mounting stability of the lower ladder through the mounting plates.

Two sides of an upper end of the upper ladder according to the present invention are respectively provided with an upper handle, while the upper handle is fixedly connected with the upper ladder, and the two sides of the lower ladder are respectively provided with a lower handle, while the lower handle is fixedly connected with the lower ladder, so that the handle can be grasped conveniently when climbing the ladder, and the safety is high.

The pressing block is vertically arranged with the stopping block according to the present invention, so as to increase a contact area between the pressing block and the stopping block and increase an acting force of the pressing block on the stopping block.

The other side of the bridge platform according to the present invention is provided with a rotary guardrail, the rotary guardrail is rotatably connected with the bridge platform, a guardrail rotation detection mechanism is arranged between the rotary guardrail and the bridge platform, the guardrail rotation detection mechanism comprises an inductor and a sensing plate, the inductor is arranged below the rotary guardrail, the sensing plate is arranged on the rotary guardrail, a lower end of the inductor is fixedly connected with the bridge platform, the inductor is connected with the vehicle PLC controller, the sensing plate is fixedly connected with the rotary guardrail, and when the rotary guardrail rotates to a rear part of the bridge platform, the sensing plate is located above the inductor and induced by the inductor, so as to avoid that the loader may hit a plane and damage the guardrail or the plane when the rotary guardrail is at a side edge.

The rotary guardrail according to the present invention is provided with a movable guardrail, the movable guardrail is slidably connected with the rotary guardrail, a movable guardrail support guide sliding mechanism is arranged below the movable guardrail, and the movable guardrail support guide sliding mechanism comprises a supporting roller, a supporting roller shaft and a supporting roller seat, an upper end face of the supporting roller butts against a lower end face of the movable guardrail, the supporting roller is movably mounted on the supporting roller shaft, the supporting roller shaft is installed on the supporting roller seat, and the supporting roller seat is fixedly connected with the rotary guardrail through a bracket, so that the movable guardrail is supported and guided by the supporting roller, such that the movable guardrail is drawn more smoothly.

The rotary guardrail according to the present invention is provided with a movable guardrail downward-pressing guide mechanism, the movable guardrail downward-pressing guide mechanism comprises a guide roller and a guide roller shaft, the rotary guardrail is fixedly provided with a guardrail slideway, the movable guardrail comprises a guardrail rod, the guardrail rod is arranged in the guardrail slideway and slidably connected with the rotary guardrail, the guide roller shaft is arranged above the guardrail rod, the guide roller is movably mounted on the guide roller shaft, a lower end face of the guide roller butts against an upper end face of the guardrail rod, and the guide roller shaft is fixedly connected with the rotary guardrail. The guide roller can guide the guardrail rod to expand and contract, and can also urge the guardrail rod to cling to the guardrail slideway without tilting.

The rotary guardrail according to the present invention comprises a guardrail frame, a rotating rod and a supporting rod, a front side of the guardrail frame is provided with the supporting rod, a rear side of the guardrail frame is provided with the rotating rod, an upper part of the rotating rod is fixedly connected with the guardrail frame, a lower end of the rotating rod is rotatably connected with the bridge platform, an upper end of the supporting rod is fixedly connected with the guardrail frame, a lower end of the supporting rod is arranged below the guardrail frame, a pluggable bolt is arranged on the supporting rod, a side edge of the bridge platform is provided with a first rod hole, the rear end of the bridge platform is provided with a second rod hole, the bolt cooperates with the first rod hole to fix the guardrail frame at the side edge of the bridge platform, and the bolt cooperates with the second rod hole to fix the guardrail frame at a rear end of the bridge platform.

The bridge platform according to the present invention is provided with a rotating rod jack, and a lower end of the rotating rod is placed in the rotating rod jack and movably connected with the bridge platform, so that the whole guardrail can be conveniently detached by pulling out the rotating rod and the bolt when the guardrail is not used or needs maintenance.

One side of the rotating rod according to the present invention is provided with an upright post, an upper end of the upright post is provided with a hinge plate, while a lower end of the upright post is connected with the bridge platform, and one end of the hinge plate is hinged with the upright post, while the other end of the hinge plate is hinged with the rotating rod, so that rotating stability of the whole guardrail is improved through the upright post.

The bridge platform according to the present invention is provided with an upright post jack, and the lower end of the upright post is placed in the upright post jack and movably connected with the bridge platform, so that the whole guardrail can be conveniently detached by pulling out the upright post and the rotating rod when the guardrail is not used or needs maintenance.

A positioning pin is arranged between the guardrail frame and the movable guardrail according to the present invention, one end of the guardrail frame close to the movable guardrail is provided with a guardrail pin hole, and the movable guardrail is provided with movable pin holes at intervals, one end of the positioning pin is placed at an outside of the guardrail frame and serves as a plug-in end, and the other end of the positioning pin passes through the guardrail pin hole and is placed in the movable pin hole to limit and fixedly connect the movable guardrail with the guardrail frame, a protruding length of the movable guardrail is adjusted by pulling out the positioning pin, and a position of the movable guardrail is locked by passing the positioning pin through the guardrail pin hole and the movable pin hole below the guardrail pin hole when appropriate.

A front end of the guardrail rod according to the present invention is provided with an anti-collision pad, and the anti-collision pad is fixedly connected with the guardrail rod and used for buffering and protecting the guardrail rod.

The main platform-bridge platform connecting mechanism is arranged between the main platform and the bridge platform according to the present invention, and the main platform-bridge platform connecting mechanism comprises the connecting frame, the connecting plate, the connecting roller and the connecting shaft, the two sides of the rear end of the bridge platform are respectively provided with the connecting frames which are fixedly connected with the bridge platform, and the connecting frame is provided with the connecting open slot, the connecting open slot faces the outside of the bridge platform, and the two sides of the front end of the main platform are respectively provided with the connecting plate, the opposite surfaces of the two connecting plates are respectively provided with the connecting rollers, one end of each connecting plate is fixedly connected with the main platform, and the other end of the connecting plate is provided with the connecting shaft, the connecting shaft is fixedly connected with the connecting plate and the connecting roller is movably installed on the connecting shaft. When the main platform rises to be flush with the bridge platform, the connecting roller enters the connecting open slot, and the outer surface of the connecting roller is in interference connection with the side wall of the connecting open slot, so as to connect the main platform and the bridge platform together and prevent the bridge platform from shaking during operation.

A front side wall of the connecting open slot according to the present invention extends forward from top to bottom to form a front guide wall, and a rear side wall of the connecting open slot extends backward from top to bottom to form a rear guide wall, which is convenient for the connecting roller to enter the connecting open slot.

As the above structure is adopted, the present invention has the advantages that the main platform and the bridge platform have the same docking height and are stably docked, the bridge platform is free from side tilting, the rotation of the guardrail is provided with detection, and the elevator is stable to step on.

### DESCRIPTION OF THE DRAWINGS

FIG. 1 is a schematic structural diagram of a loader of the present invention from one angle.
FIG. 2 is a schematic structural diagram of the loader of the present invention from another angle.
FIG. 3 is a schematic structural diagram of the loader of the present invention from still another angle.
FIG. 4 is a plan view of the loader of the present invention.
FIG. 5 is an enlarged drawing of an automatic leveling device for the conveying platform in the present invention.
FIG. 6 is an enlarged drawing of a baffle and various sensors on a bridge platform in the present invention.
FIG. 7 is an enlarged drawing of a bridge platform side-tilting prevention mechanism in the present invention.
FIG. 8 is a sectional view of a portion A in FIG. 7 in the present invention.
FIG. 9 is a sectional view of a portion B in FIG. 7 in the present invention.
FIG. 10 is an enlarged drawing showing extension of an elevator in the present invention.
FIG. 11 is a sectional view of a portion C in FIG. 10 in the present invention.
FIG. 12 is an enlarged drawing of a portion D in FIG. 10 in the present invention.
FIG. 13 is an enlarged drawing showing retraction of the elevator in the present invention.
FIG. 14 is an enlarged drawing of a rotary guardrail of the present invention from one angle.
FIG. 15 is an enlarged drawing of a movable guardrail support guide sliding mechanism in FIG. 14 in the present invention.
FIG. 16 is an enlarged drawing of a movable guardrail downward-pressing guide mechanism in FIG. 14 in the present invention.
FIG. 17 is an enlarged drawing of the rotary guardrail of the present invention from another angle.
FIG. 18 is an enlarged drawing of the rotary guardrail of the present invention from still another angle.
FIG. 19 is an enlarged drawing of a main platform-bridge platform connecting mechanism in the present invention.

Reference numerals: 1 refers to main platform, 2 refers to bridge platform, 3 refers to automatic leveling mechanism, 4 refers to baffle, 5 refers to supporting plate, 6 refers to low-level sensor, 7 refers to aligning sensor, 8 refers to high-level sensor, 9 refers to following sensor, 10 refers to ultra-high shutdown protection sensor, 11 refers to baffle lowering sensor, 12 refers to chassis, 13 refers to operating board, 14 refers to lifting mechanism, 15 refers to roller, 16 refers to bridge platform side-tilting prevention mechanism, 17 refers to hook, 18 refers to guide supporting plate, 19 refers to roller shaft, 20 refers to connecting block, 21 refers to sliding pole, 22 refers to elevator, 23 refers to upper ladder, 24 refers to floating ladder, 25 refers to lower ladder, 26 refers to hanging plate, 27 refers to hanging groove, 28 refers to pressing block, 29 refers to ladder slideway, 30 refers to clamping hook plate, 31 refers to stopping block, 32 refers to fixed mounting frame, 33 refers to fixed supporting frame, 34 refers to clamping groove, 35 refers to guide groove, 36 refers to mounting plate, 37 refers to upper handle, 38 refers to lower handle, 39 refers to rotary guardrail, 41 refers to pin, 42 refers to guardrail frame, 43 refers to rotating rod, 44 refers to supporting rod, 45 refers to guardrail rotation detection mechanism, 46 refers to inductor, 47 refers to sensing plate, 48 refers to upright post, 49 refers to hinge plate, 50 refers to movable guardrail, 51 refers to anti-collision pad, 52 refers to positioning pin, 53 refers to movable guardrail support guide sliding mechanism, 54 refers to supporting roller, 55 refers to supporting roller shaft, 56 refers to supporting roller seat, 57 refers to movable guardrail downward-pressing guide mechanism, 58 refers to guide roller, 59 refers to guardrail rod, 60 refers to main platform-bridge platform connecting mechanism, 61 refers to connecting frame, 62 refers to connecting plate, 63 refers to connecting roller, and 64 refers to connecting open slot.

### DETAILED DESCRIPTION OF PREFERRED EMBODIMENTS

The embodiments of the present invention will be described in further detail with reference to the drawings hereinafter.

An automatic leveling device for a conveying platform comprises a main platform 1 and a bridge platform 2, wherein an automatic leveling mechanism 3 is arranged between the main platform 1 and the bridge platform 2. The automatic leveling mechanism 3 comprises a baffle 4, a supporting plate 5, a low-level sensor 6 and an aligning sensor 7. At least one baffle 4 is arranged between the main platform 1 and the bridge platform 2. A supporting plate 5 is arranged on the main platform 4, one end of the supporting plate 5 is fixedly connected with the main platform 1, and the other end of the supporting plate is exposed from the main platform 1 and placed below the baffle 4. The baffle 4 is hinged with the bridge platform 2, two ends of the baffle 4 are free ends, and one end of the baffle 4 faces the supporting plate 5 and is fixedly provided with the low-level sensor 6. The aligning sensor 6 is arranged between the other end of the baffle 4 and the bridge platform 2, one end of the aligning sensor 7 is fixedly connected with the bridge platform 2, and the other end of the aligning sensor is arranged at interval with the baffle 4, so that when the supporting plate contacts the low-level sensor on the baffle in use as the main platform rises, the low-level sensor can sense the supporting plate, and a rising velocity of the main platform can be reduced through a loader control system, such that the rising velocity of the main platform is switched from fast to slow, one end of the supporting plate supporting the baffle rotates upwards, and the other end of the baffle rotates downwards; when the aligning sensor senses the baffle, the loader control system controls the main platform to stop rising, so that the main platform and the bridge platform are flush, the adjustment is convenient, and cargos are conveyed stably.

One side of the aligning sensor 7 according to the present invention is provided with a following sensor 9, one end of the following sensor 9 is fixedly connected with the bridge platform 2, the other end of the following sensor faces the baffle 4, and a height of the following sensor 9 is higher than a height of the aligning sensor 7, so that when in use, as the main platform rises, when the supporting plate touches the low-level sensor on the baffle, the low-level sensor senses the supporting plate, and the rising velocity of the main platform is reduced by the loader control system, such that the rising velocity of the main platform is switched from fast to slow. The supporting plate supports one end of the baffle to rotate upwards and the other end of the baffle to rotate downwards. When the following sensor senses the baffle, the loader control system controls the main platform to follow the bridge platform up and down until the main platform is flush with the bridge platform.

One side of the aligning sensor 7 according to the present invention is provided with a high-level sensor 8, one end of the high-level sensor 8 is fixedly connected with the bridge platform 2, the other end of the following sensor faces the baffle 4, and a height of the high-level sensor 8 is lower than the height of the aligning sensor 7, so that when in use, when the aligning sensor fails, the main platform continues to rise, the supporting plate supports one end of the baffle to continue to rotate upwards and the other end of the baffle to rotate downwards, the high-level sensor touches the baffle, and the loader control system controls the main platform to descend instead of rising.

One side of the aligning sensor 7 according to the present invention is provided with an ultra-high shutdown protection sensor 10, one end of the ultra-high shutdown protection sensor 10 is fixedly connected with the bridge platform 2, the other end of the ultra-high shutdown protection sensor faces the baffle 4, and a height of the ultra-high shutdown protection sensor 10 is lower than the height of the aligning sensor 7, so that when in use, when the baffle or other sensor on the bridge platform fails, the main platform continues to rise, the supporting plate supports one end of the baffle to continue to rotate upwards and the other end of the baffle to rotate downwards, the ultra-high shutdown protection sensor senses the baffle, the loader control system cuts off the power and the main platform stops rising.

One side of the aligning sensor 7 according to the present invention is provided with a baffle lowering sensor 11, one end of the baffle lowering sensor 11 is fixedly connected with the bridge platform 2, the other end of the baffle lowering sensor faces the baffle 4, and a height of the baffle lowering sensor 11 is higher than the height of the aligning sensor 7, so that a position of the baffle can be detected by the baffle lowering sensor, and the baffle can be confirmed to be in a state of being lifted and rotated by the supporting plate.

A loader comprises a chassis 12 and a vehicle PLC controller, wherein the chassis 12 is provided with the automatic leveling device for the conveying platform above, the main platform 1 and the bridge platform 2 are respectively connected with the chassis 12 through a lifting mechanism 14, the low-level sensor 6, the aligning sensor 7, the high-level sensor 8, the following sensor 9, the ultra-high shutdown protection sensor 10, the baffle lowering sensor 11 and the lifting mechanism 14 are respectively connected with the vehicle PLC controller, so that when the loader is docked with an airplane, cargo can be quickly conveyed after leveling by the automatic leveling device for the conveying platform.

The main platform 1 according to the present invention is provided with a conveying motor, a chain, a chain wheel, a conveying roller, a roller shaft and a motor controller. The bridge platform 2 is provided with a conveying motor, a chain, a chain wheel, a conveying roller, a roller shaft and a motor controller. The main platform 1 and the bridge platform 2 are respectively provided with a roller shaft at intervals. Two ends of the roller shaft are fixedly connected with the main platform 1 or the bridge platform 2 through a bearing. The conveying roller is mounted on the roller shaft, and an output shaft of the conveying motor is connected with the roller shaft through the chain and the chain wheel. The conveying motor is connected with the motor controller, the conveying motor and the motor controller are fixed on the main platform 1 or the bridge platform 2, and the motor controller is connected with the vehicle PLC controller, so as to realize forward, backward, left, right and 360-degree rotation of the cargo.

One side of the bridge platform 2 according to the present invention is provided with an operating board 13, and the other side of the bridge platform 2 is provided with a bridge platform side-tilting prevention mechanism 16. The bridge platform side-tilting prevention mechanism 16 comprises a hook 17 and a guide supporting plate 18. The hook 17 is arranged below the other side of the bridge platform 2, a lower end of the hook 17 is hinged with a roller shaft 19 of the lifting mechanism 14 at a lower end of the bridge platform 2, and an upper part of the hook 17 is provided with a guide supporting plate18 facing the roller shaft 19. An upper end of the guide supporting plate 18 is butted against and slidably connected with the hook 17, and the guide supporting plate 18 is fixedly connected with the bridge platform 2, so that during a lifting process of the bridge platform, the hook moves on the guide supporting plate due to the movement of the roller shaft, and the hook is always hung on the guide supporting plate, such that the side of the bridge platform far away from the operating board may not be tilted, thereby realizing the balance of the whole bridge platform.

The hook 17 according to the present invention comprises a connecting block 20 and a sliding pole 21. An upper end of the connecting block 20 is provided with the sliding pole 21, and a lower end of the connecting block is hinged with the roller shaft 19. One end of the sliding pole 21 is fixedly connected with the connecting block 20, and the other end of the sliding pole is draped on an upper end face of the guide supporting plate 18. The sliding pole 21 is slidably connected with the guide supporting plate 18, so as to be hung on the guide supporting plate through the slide bar, the lower end of the connecting block is hinged with the roller shaft, while the connecting block and the slide bar form the hook to hook the guide supporting plate at all times, so that the side bridge platform connected with the guide supporting plate is downward and does not incline.

One side of the bridge platform 2 according to the present invention is provided with an elevator 22. The elevator 22 comprises an upper ladder 23, a floating ladder 24 and a lower ladder 25. The upper ladder 23 is fixedly connected with the bridge platform 2, and two sides of a lower part of the upper ladder 23 are respectively provided with a hanging plate 26. The hanging plate 26 is fixedly connected with the upper ladder 23, and a hanging groove 27 with an upward opening is formed between the hanging plate 26 and the upper ladder 23. Two sides of a lower end of the upper ladder 23 are respectively provided with a pressing block 28, and the pressing block 28 is located below the hanging plate 26. One end of the pressing block 28 is fixedly connected with the upper ladder 23, and the other end of the pressing block is arranged outside the upper ladder 23 to form a pressing end. One side of the upper ladder 23 far from the bridge platform 2 is provided with the floating ladder 24 and the lower ladder 25 at intervals. The lower ladder 25 is fixedly connected with the chassis 12, ladder slideways 29 are fixedly arranged on both sides of an upper part of the lower ladder 23, and the floating ladder 24 is located between the upper ladder 23 and the lower ladder 25. The floating ladder 24 is slidably connected with the lower ladder 25 through the ladder slideways 29, two sides of an upper end of the floating ladder 24 are respectively provided with a clamping hook plate 30, and two sides of a lower end of the floating ladder 24 are respectively provided with a stopping block 31. One end of the clamping hook plate 30 is fixedly connected with the floating ladder 24, and the other end of the clamping hook plate extends to a direction of the upper ladder 23 to form a hanging end. The clamping hook plate 30 is clamped into the hanging groove 27 to connect the floating ladder 24 with the upper ladder 23. One end of the stopping block 31 is fixedly connected with the floating ladder 24, and the other end of the stopping block extends to the direction of the upper ladder 23 to form a bearing end. The upper ladder 23 is downward, and the pressing block 28 is pressed on the stopping block 31 to drive the floating ladder 24 to descend. The upper ladder and the floating ladder can ascend and descend as the bridge platform ascends and descends which can ascend and descend smoothly, have stable structure and do not shake.

A fixed mounting frame 32 is arranged between the upper ladder 23 and the bridge platform 2 according to the present invention, one end of the fixed mounting frame 32 is fixedly connected with the upper ladder 23, and the other end of the fixed mounting frame is fixedly connected with the bridge platform 2. Two sides of the lower ladder 25 are respectively provided with a fixed supporting frame 33, one end of the fixed supporting frame 33 is fixedly connected with the lower ladder 25 and the other end of the fixed supporting frame is fixedly connected with the chassis 12, so that mounting stability of the upper ladder and the lower ladder can be improved through the fixed mounting frame and the fixed supporting frame.

The clamping hook plate 30 according to the present invention is provided with a downward opening clamping groove 34, an open end of the clamping groove 34 opens outwards to form a guide groove 35, and an opening angle of the guide groove 35 is larger than an opening angle of the clamping groove 34, so that the clamping hook plate and the hanging plate can be conveniently butted, the clamping hook plate is clamped into the hanging groove, and the hanging plate enters the clamping groove, so that the hanging is stable and the floating ladder ascends smoothly.

Two sides of a lower end of the lower ladder 25 according to the present invention are respectively provided with a mounting plate 36, one end of the mounting plate 36 is fixedly connected with the lower ladder 25, and the other end of the mounting plate is fixedly connected with the chassis 12, so as to further improve mounting stability of the lower ladder through the mounting plates.

Two sides of an upper end of the upper ladder 23 according to the present invention are respectively provided with an upper handle 37, while the upper handle 37 is fixedly connected with the upper ladder 23, and the two sides of the lower ladder 25 are respectively provided with a lower handle 38, while the lower handle 38 is fixedly connected with the lower ladder 25, so that the handle can be grasped conveniently when climbing the ladder, and the safety is high.

The pressing block 28 is vertically arranged with the stopping block 31 according to the present invention, so as to increase a contact area between the pressing block and the stopping block and increase an acting force of the pressing block on the stopping block.

The other side of the bridge platform 2 according to the present invention is provided with a rotary guardrail 39, and the rotary guardrail 39 is rotatably connected with the bridge platform 2. A guardrail rotation detection mechanism 45 is arranged between the rotary guardrail 39 and the bridge platform 2. The guardrail rotation detection mechanism 45 comprises an inductor 46 and a sensing plate 47. The inductor 46 is arranged below the rotary guardrail 39, and the sensing plate 47 is arranged on the rotary guardrail 39. A lower end of the inductor 46 is fixedly connected with the bridge platform 2, the inductor is connected with the vehicle PLC controller, and the sensing plate 47 is fixedly connected with the rotary guardrail 39. When the rotary guardrail 39 rotates to a rear part of the bridge platform 2, the sensing plate 47 is located above the inductor 46 and induced by the inductor 46, so as to avoid that the loader may hit a plane and damage the guardrail or the plane when the rotary guardrail is at a side edge.

The rotary guardrail 39 according to the present invention is provided with a movable guardrail 50, and the movable guardrail 50 is slidably connected with the rotary guardrail 39. A movable guardrail support guide sliding mechanism 53 is arranged below the movable guardrail 50, and the movable guardrail support guide sliding mechanism 53 comprises a supporting roller 54, a supporting roller shaft 55 and a supporting roller seat 56. An upper end face of the supporting roller 54 butts against a lower end face of the movable guardrail 50, the supporting roller 54 is movably mounted on the supporting roller shaft 55, the supporting roller shaft 55 is installed on the supporting roller seat 56, and the supporting roller seat 56 is fixedly connected with the rotary guardrail 39 through a bracket, so that the movable guardrail is supported and guided by the supporting roller, such that the movable guardrail is drawn more smoothly.

The rotary guardrail 39 according to the present invention is provided with a movable guardrail downward-pressing guide mechanism 57. The movable guardrail downward-pressing guide mechanism 57 comprises a guide roller 58 and a guide roller shaft. The rotary guardrail 39 is fixedly provided with a guardrail slideway. The movable guardrail 50 comprises a guardrail rod 59, the guardrail rod 59 is arranged in the guardrail slideway and slidably connected with the rotary guardrail 39. The guide roller shaft is arranged above the guardrail rod 59, the guide roller 58 is movably mounted on the guide roller shaft, a lower end face of the guide roller 58 butts against an upper end face of the guardrail rod 59, and the guide roller shaft is fixedly connected with the rotary guardrail 39. The guide roller can guide the guardrail rod to expand and contract, and can also urge the guardrail rod to cling to the guardrail slideway without tilting.

The rotary guardrail 39 according to the present invention comprises a guardrail frame 42, a rotating rod 43 and a supporting rod 44. A front side of the guardrail frame 42 is provided with the supporting rod 44, a rear side of the guardrail frame is provided with the rotating rod 43, an upper part of the rotating rod 43 is fixedly connected with the guardrail frame 42, and a lower end of the rotating rod is rotatably connected with the bridge platform 2. An upper end of the supporting rod 44 is fixedly connected with the guardrail frame 42, a lower end of the supporting rod 44 is arranged below the guardrail frame 42, and a pluggable bolt 41 is arranged on the supporting rod 44. A side edge of the bridge platform 2 is provided with a first rod hole, the rear end of the bridge platform 2 is provided with a second rod hole, the bolt 41 cooperates with the first rod hole to fix the guardrail frame 42 at the side edge of the bridge platform 2, and the bolt 41 cooperates with the second rod hole to fix the guardrail frame 42 at a rear end of the bridge platform 2.

The bridge platform 2 according to the present invention is provided with a rotating rod jack, and a lower end of the rotating rod 43 is placed in the rotating rod jack and movably connected with the bridge platform 2, so that the whole guardrail can be conveniently detached by pulling out the rotating rod and the bolt when the guardrail is not used or needs maintenance.

One side of the rotating rod 43 according to the present invention is provided with an upright post 48, an upper end of the upright post 48 is provided with a hinge plate 49, while a lower end of the upright post is connected with the bridge platform 2, and one end of the hinge plate 49 is hinged with the upright post 48, while the other end of the hinge plate is hinged with the rotating rod 43, so that rotating stability of the whole guardrail is improved through the upright post.

The bridge platform 2 according to the present invention is provided with an upright post jack, and the lower end of the upright post 48 is placed in the upright post jack and movably connected with the bridge platform, so that the whole guardrail can be conveniently detached by pulling out the upright post and the rotating rod when the guardrail is not used or needs maintenance.

A positioning pin 52 is arranged between the guardrail frame 42 and the movable guardrail 50 according to the present invention, one end of the guardrail frame 42 close to the movable guardrail 50 is provided with a guardrail pin hole, and the movable guardrail 50 is provided with movable pin holes at intervals. One end of the positioning pin 52 is placed at an outside of the guardrail frame 42 and serves as a plug-in end, and the other end of the positioning pin passes through the guardrail pin hole and is placed in the movable pin hole to limit and fixedly connect the movable guardrail 50 with the guardrail frame 42, a protruding length of the movable guardrail is adjusted by pulling out the positioning pin, and a position of the movable guardrail is locked by passing the positioning pin through the guardrail pin hole and the movable pin hole below the guardrail pin hole when appropriate.

A front end of the guardrail rod 59 according to the present invention is provided with an anti-collision pad 51, and the anti-collision pad 51 is fixedly connected with the guardrail rod 59 and used for buffering and protecting the guardrail rod.

The main platform-bridge platform connecting mechanism 60 is arranged between the main platform 1 and the bridge platform 2 according to the present invention, and the main platform-bridge platform connecting mechanism 60 comprises the connecting frame 61, the connecting plate 62, the connecting roller 63 and the connecting shaft. The two sides of the rear end of the bridge platform 2 are respectively provided with the connecting frames 61. The connecting frames 61 are fixedly connected with the bridge platform 2, and the connecting frame 61 is provided with the connecting open slot 64. The connecting open slot 64 faces the outside of the bridge platform 2, and the two sides of the front end of the main platform 1 are respectively provided with the connecting plate 62. The opposite surfaces of the two connecting plates 62 are respectively provided with the connecting rollers 63, one end of each connecting plate 62 is fixedly connected with the main platform 1, and the other end of the connecting plate is provided with the connecting shaft. The connecting shaft is fixedly connected with the connecting plate 62 and the connecting roller 63 is movably installed on the connecting shaft. When the main platform 1 rises to be flush with the bridge platform 2, the connecting roller 63 enters the connecting open slot 64, and the outer surface of the connecting roller 63 is in interference connection with the side wall of the connecting open slot 64, so as to connect the main platform and the bridge platform together and prevent the bridge platform from shaking during operation.

The connecting open slot 64 according to the present invention comprises a front side wall and a rear side wall. The front side wall of the connecting open slot 64 extends forward from top to bottom to form a front guide wall, and the rear side wall of the connecting open slot 64 extends backward from top to bottom to form a rear guide wall, which is convenient for the connecting roller to enter the connecting open slot.

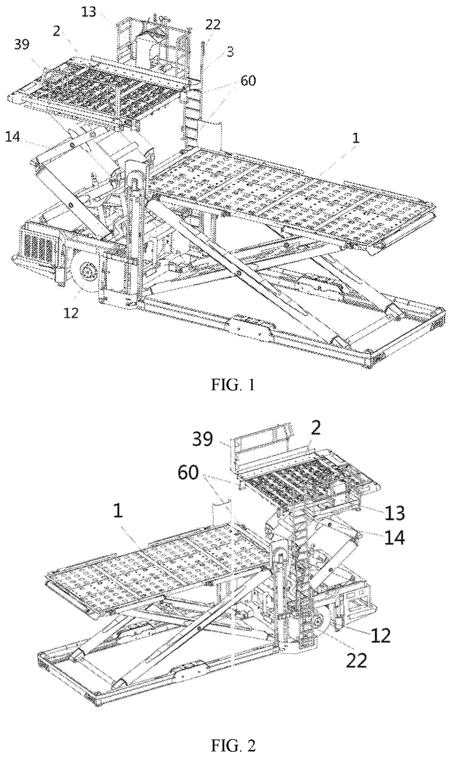

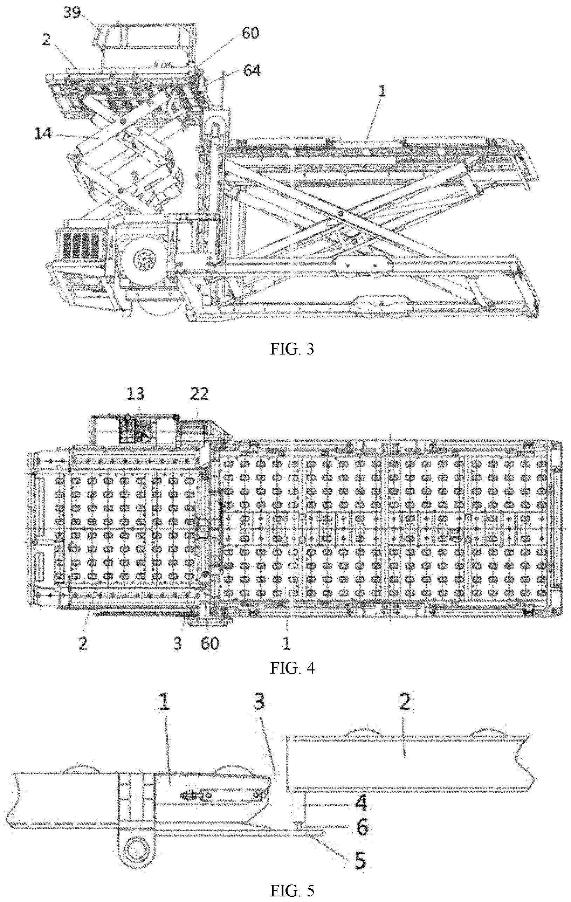

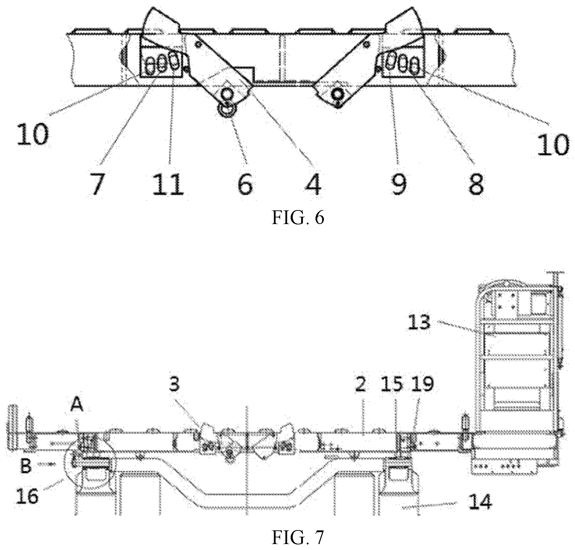

As shown in FIG. 1, FIG. 4, FIG. 5 and FIG. 6, an automatic leveling mechanism is arranged between the main platform and the bridge platform of the present invention. FIG. 5 is a partially enlarged drawing when the main platform is about to be flush with the bridge platform. In order to reduce a docking gap between the main platform and the bridge platform, one groove may be set in the middle of one end of the bridge platform facing the main platform for mounting the automatic leveling mechanism. As shown in FIG. 1 and FIG. 4, the baffle is mounted in the groove of the bridge platform, and one baffle or two baffles may be set on the bridge platform. When one baffle is arranged, an upper position in the middle of the baffle is hinged with the bridge platform, one end of the baffle faces downwards toward the baffle and a low-level sensor is fixedly installed, and the other end of the baffle faces upwards. The baffle lowering sensor, the following sensor, the aligning sensor, the high-level sensor and the ultra-high shutdown protection sensor are sequentially arranged at intervals between the baffle facing upwards and the bridge platform, and positions and heights of the baffle lowering sensor, the following sensor, the aligning sensor, the high-level sensor and the ultra-high shutdown protection sensor on the bridge platform are reduced in sequence. When two baffles are arranged, as shown in FIG. 6, a left baffle is arranged on a left side and a right baffle is arranged on a right side in the groove of the bridge platform, a middle-upper part of the left baffle and the middle-upper part of the right baffle are hinged with the bridge platform respectively, a lower end of the left baffle is fixedly provided with the low-level sensor, and the baffle lowering sensor, the aligning sensor and the ultra-high shutdown protection sensor are arranged between a right end of the left baffle and the bridge platform. The baffle lowering sensor, the aligning sensor and the ultra-high shutdown protection sensor are respectively fixed on the bridge platform and arranged at intervals from the left baffle. Positions and heights of the baffle lowering sensor, the aligning sensor and the ultra-high shutdown protection sensor on the bridge platform are reduced in sequence. A left end of the right baffle is a free end downward, and the following sensor, the high-level sensor and the ultra-high shutdown protection sensor are arranged between the right end of the right baffle and the bridge platform. The following sensor, the high-level sensor and the ultra-high shutdown protection sensor are fixed on the bridge platform and arranged at intervals from the right baffle, and positions and heights of the following sensor, the high-level sensor and the ultra-high shutdown protection sensor on the bridge platform are reduced in turn. In this embodiment, two or one ultra-high shutdown protection sensors may be arranged as required. The supporting plate is located below the two baffles for supporting and driving the two baffles to rotate. The low-level sensor may be set to sense when a height of an upper end face of the main platform is lower than that of an upper end face of the bridge platform by 100 mm. The following sensor may be set to sense when the height of the upper end face of the main platform is lower than that of the upper end face of the bridge platform by 30 mm. The baffle lowering sensor may be set to sense when the height of the upper end face of the main platform is lower than that of the upper end face of the bridge platform by an arbitrary value between 100 and 30, and is used to sense that the baffle is lifted. The aligning sensor is set to sense when the height of the upper end face of the main platform is consistent with that of the upper end face of the bridge platform, and the high-level sensor may be set to sense when the height of the upper end face of the main platform is higher than that of the bridge platform by 20 mm. The ultra-high shutdown protection sensor may be set to sense when the height of the upper end face of the main platform is higher than that of the upper end face of the bridge platform by a value as required, for example, any value between 30 mm and 50 mm. The values of each sensor described in the present invention are not limited to the specific values in this embodiment, and may be set according to specific requirements. When in use, taking the left baffle and the right baffle mounted on the bridge platform as an example, when the main platform rises rapidly from a low position to 100 mm below the bridge platform, an upper end face of the supporting plate abuts against the low-level sensor at the right end of the left baffle, and the low-level sensor receives a signal and transmits the signal to the PLC controller. The PLC controller controls the lifting mechanism of the main platform, so that the rising velocity of the main platform is reduced from fast to slow, and the main platform continues to rise slowly. The baffle lowering sensor senses the left baffle, indicating that the main platform is rising continuously. The supporting plate supports the right end of the left baffle and the left end of the right baffle to rotate upwards respectively, so that the left end of the left baffle and the right end of the right baffle rotate downwards until the main platform rises to 38 mm below the bridge platform. The following sensor senses the right end of the right baffle and transmits a signal to the PLC controller. The PLC controller controls the lifting mechanism of the main platform and the lifting mechanism of the bridge platform, and the main platform is in a tracking lifting state, and can simultaneously ascend and descend with the bridge platform until the main platform is flush with the bridge platform. When the heights of the main platform and the upper end face of the bridge platform are consistent, the aligning sensor receives a signal and transmits the signal to the PLC controller. The PLC controller controls the lifting mechanism of the main platform, so that the main platform stops rising and cargo conveying can be carried out. If the low-level sensor, the baffle lowering sensor and the aligning sensor fail, the main platform will continue to rise. When the main platform rises to 20 mm higher than the bridge platform, the high-level sensor senses the right baffle and transmits a signal to the PLC controller. The PLC controller controls the lifting mechanism of the main platform to make the main platform descend. If the high-level sensor also fails, the main platform continues to rise, and the right end of the left baffle and the left end of the right baffle keep rising with the supporting plate, so that the ultra-high shutdown protection sensor senses the left end of the left baffle and the right end of the right baffle, and transmits a signal to the PLC controller. The PLC controller controls the main platform and the bridge platform to stop ascending and descending at the same time, and the main platform and the bridge platform may be used again after maintenance by workers. The present invention has a simple structure, enables the main platform to be automatically docked with the bridge platform through the automatic leveling mechanism, and has the advantages of high adjustment velocity, smooth docking, smooth cargo conveying and no jamming, thus indirectly improving the cargo conveying velocity.

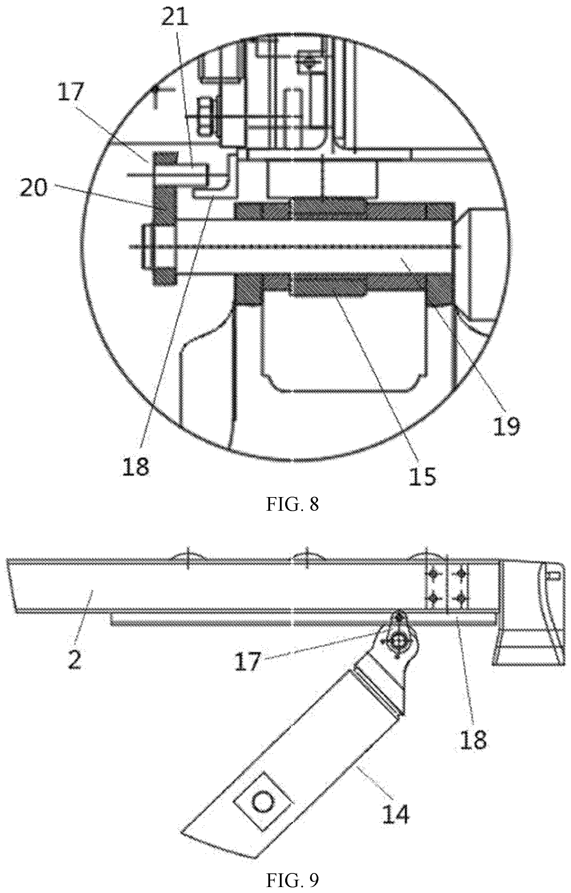

As shown in FIG. 3, and FIG. 7 to FIG. 9, the bridge platform side-tilting prevention mechanism is also arranged in the present invention. For convenience of description, the orientation of FIG. 3 is used for illustration. A right side of the bridge platform is provided with the operating table, which makes a center of gravity of the bridge platform move to the right, easy to tilt to the right, and even has the risk of rollover. The bridge platform side-tilting prevention mechanism is provided on a left side of the bridge platform, and the lifting mechanism is provided between the lower end of the bridge platform and the chassis. The lifting mechanism belongs to the prior art, and a scissor frame of the lifting mechanism is driven by a driving cylinder. The scissor frame comprises scissor arms, as shown in FIG. 3. An upper end of one scissor arm is hinged with a front part of the lower end of the bridge platform, and an upper end of the other scissor arm is slidably connected with a rear part of the lower end of the bridge platform through rollers. The rollers are movably mounted on the roller shaft, and the two ends of the roller shaft are fixedly connected with the scissor arms. The hook is movably mounted on the roller shaft of the scissor arm at the lower end of the left side of the bridge platform, and the guide supporting plate is arranged at the lower end of the left side of the bridge platform. A right side of the guide supporting plate is fixedly connected with the bridge platform, the sliding pole is pressed on the guide supporting plate, and the lower end of the connecting block is hin with the roller shaft, so that the connecting block can swing back and forth relative to the roller shaft. In the ascending and descending process of the bridge platform, the sliding pole can always lean against the guide supporting plate and slide along the guide supporting plate, so as to ensure that the bridge platform is always restrained by the hook and does not tilt in the ascending and descending process.

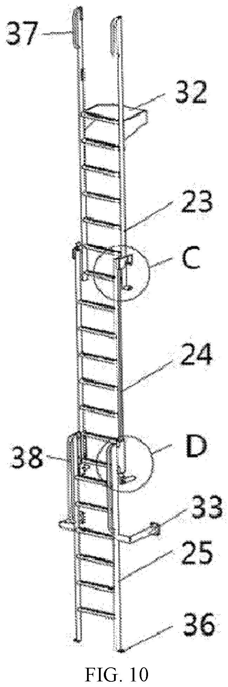

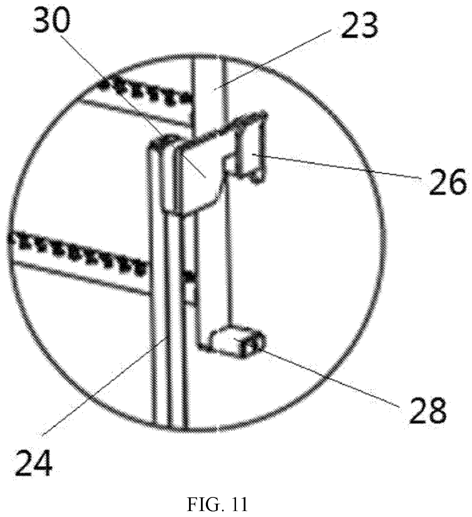

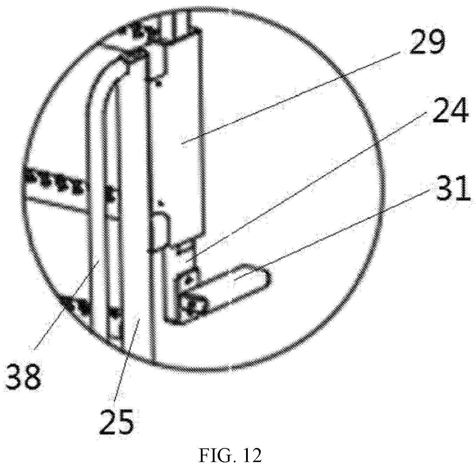

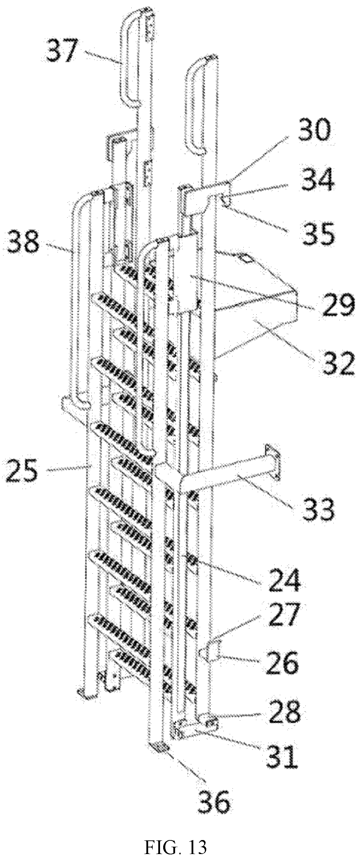

As shown in FIG. 2 and FIG. 10 to FIG. 13, the elevator is arranged at one side of the operating board. The elevator consists of the upper ladder, the floating ladder and the lower ladder. When the bridge platform is driven to ascend by the lifting mechanism, the upper ladder is driven to ascend until the hanging plate of the upper ladder of the upper ladder is clamped with the clamping hook plate of the floating ladder, and the upper ladder continues to ascend. The floating ladder is driven to ascend by the hanging plate and the clamping hook plate. After the bridge platform ascends in place, the upper ladder and the floating ladder stop ascending, and the upper end of the floating ladder is connected with the hanging plate through the clamping hook plate, while the lower end of the floating ladder is connected with the slideway through the sliding block. The floating ladder is stable in structure and will not shake. In this case, an operator can hold the lower handle and enter the bridge platform from the lower ladder through the floating ladder and the upper ladder in turn. When the bridge platform descends, the bridge platform descends to drive the upper ladder to descend, the upper ladder descends, the floating ladder does not move, and the hanging plate of the upper ladder is separated from the clamping hook plate. The pressing block at the lower end of the upper ladder touches the stopping block of the floating ladder, the upper ladder continues to descend, and the pressing block presses the stopping block to drive the floating ladder to descend until the bridge platform stops descending, and the upper ladder and the floating ladder stop accordingly.

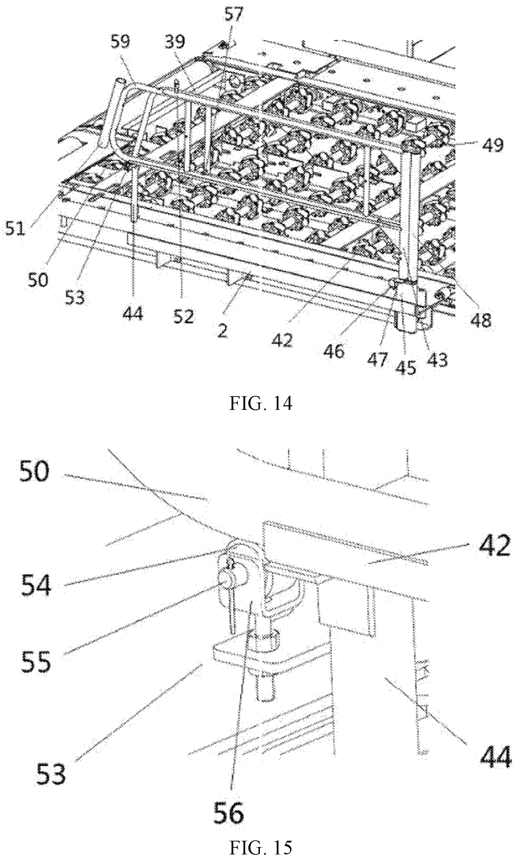

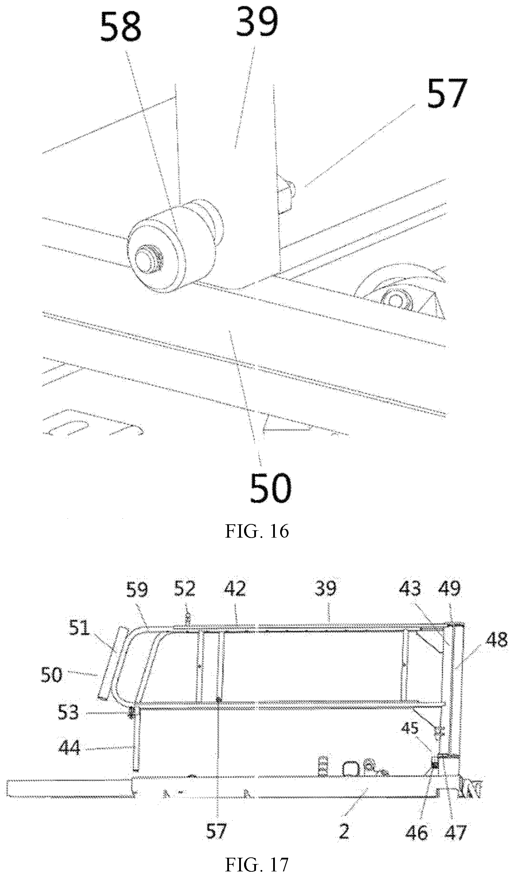

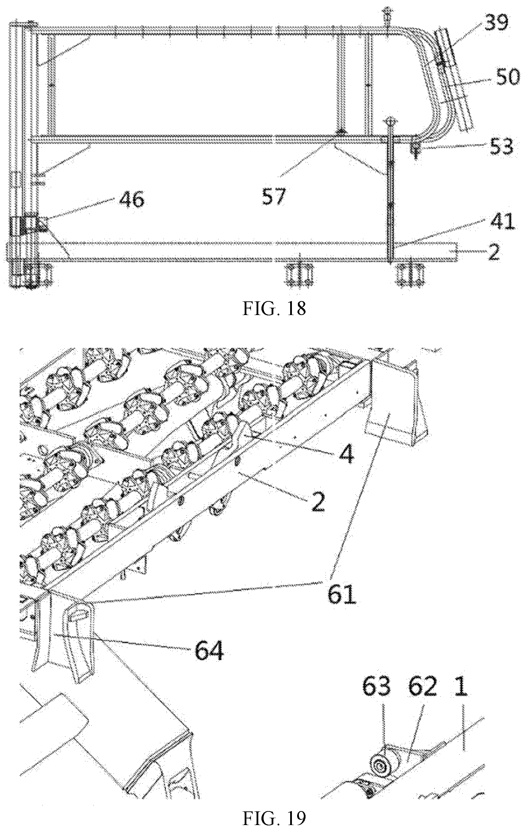

As shown in FIG. 1 to FIG. 3 and FIG. 14 to FIG. 18, in the present invention, the rotary guardrail is arranged on the left side of the bridge platform, that is, on the side far from the operating board. As shown in FIG. 14 and FIG. 17, the guardrail rotation detection mechanism is arranged between the rotary guardrail and the bridge platform, and the inductor is connected with the vehicle PLC controller. As shown in FIG. 1 to FIG. 3, the rotary guardrail is arranged on the side edge of the bridge platform. In this case, the sensing plate is located at the side edge of the inductor, the inductor cannot sense the sensing plate, and the vehicle PLC controller cannot receive the signal of the inductor. In this case, the loader cannot walk. If the loader walks and docks with the plane in this case, the movable guardrail may hit the plane, so the loader will not move, and the operator may manually pull up the bolt, so that the bolt can be pulled out from the first rod hole, and manually rotate the rotary guardrail to the rear end of the bridge platform. The bolt is loosened, the lower end of the bolt is inserted into the second rod hole at the rear end of the bridge platform, and the rotary guardrail is fixed at the rear end of the bridge platform. In this process, the rotary guardrail rotates to drive the sensing plate to rotate. When the rotary guardrail rotates to the rear end of the bridge platform, the sensing plate rotates right above the inductor, and the inductor senses the sensing plate and transmits a signal to the vehicle PLC controller, and the vehicle PLC controller starts the a walking mechanism, so that the loader can walk. The present invention is provided with the movable guardrail support guide sliding mechanism and the movable guardrail downward-pressing guide mechanism. As shown in FIG. 15 and FIG. 16, the lower end face of the guardrail rod abuts against the upper end face of the supporting roller, and the upper end face of the guardrail rod abuts against the lower end face of the guide roller. Both the supporting roller and the guide roller can roll. The supporting roller can support and guide the guardrail rod, and the guide roller can guide the guardrail rod to expand and contract and urge the guardrail rod to cling to the guardrail slideway without tilting. The supporting roller and the guide roller clamp the guardrail rod together to ensure smooth extension and retraction of the guardrail rod.

As shown in FIG. 1 to FIG. 4 and FIG. 19, the main platform-bridge platform connecting mechanism is also arranged between the main platform and the bridge platform according to the present invention. The connecting roller is connected with the connecting shaft through a shaft sleeve, and the connecting roller can rotate. When the main platform rises, the main platform drives the connecting roller to rise, and the connecting roller enters the connecting open slot from bottom to top, and the lower end of the connecting open slot is flared to facilitate the connecting roller to enter the connecting open slot. When the main platform rises to be flush with the bridge platform, the connecting roller is place in the connecting open slot, and the outer surface of the connecting roller is at least pressed against one side wall of the connecting open slot, so that when the bridge platform is unstable and needs to swing left and right during cargo transportation, the connecting open slot of the bridge platform is in interference connection with the connecting roller to drive the main platform to swing, but the main platform is heavy and will not swing or shake, and the main platform will be conversely in interference connection with the open slot through the connecting roller to make the bridge platform unable to swing left and right, thus realizing the stability of the bridge platform.

The loader in the present invention may be driven hydraulically or electrically. The driving cylinder of the lifting mechanism of the main platform may be an electric cylinder or a hydraulic cylinder, and the driving cylinder of the lifting mechanism of the bridge platform may be an electric cylinder or a hydraulic cylinder. The driving cylinder of the lifting mechanism between the main platform and the chassis can be a hydraulic cylinder or an electric cylinder, and the driving cylinder of the lifting mechanism between the bridge platform and the chassis can be a hydraulic drive or an electric drive. The drive of the cargo conveying on the main platform and the bridge platform may be hydraulic drive or electric drive. When the electric drive is adopted, the conveying motor drives the conveying roller to rotate for conveying cargo, and the structure of the prior art is adopted for the conveying roller, which will not be repeated here. Through the combination of different steering rollers, forward, backward, left, right and 360-degree rotation of the cargo can be realized. One motor controller controls a plurality of conveying motors at the same time. The vehicle PLC controller sends a rotating velocity instruction to the motor controller by detecting a switch signal, a direction signal and a velocity demand signal. The vehicle PLC controller adjusts the rotating velocity instruction according to demands and controls a conveying velocity of the roller. The conveying motor may be a permanent magnet deceleration motor, and the permanent magnet deceleration motor has an integrated structure of a reducer, a temperature sensor and a permanent magnet motor. The permanent magnet motor is an asynchronous starting permanent magnet synchronous motor with a surface rotor structure. The permanent magnet is fixed outside a rotor of a starting cage with a high-strength stainless steel ring, and the rotor shaft of the motor and the reducer are integrated. A temperature sensor is installed on a stator of the permanent magnet motor. The stator, a rotor and the reducer of the permanent magnet motor are encapsulated in a casing of the motor through end covers at two ends. A cooling fan is arranged on the rear cover of the motor, the fan takes away the heat when the motor works by cooling radiating ribs on a surface of the casing, and the motor controller can judge a fault state of the conveying motor. When a working current of the permanent magnet motor is greater than a current preset value, the motor controller can cut off a working power supply of the conveying motor, and the motor controller is also used to judge a temperature state of the conveying motor. When a temperature of the permanent magnet motor is too high, the motor controller may carry out a derating or shutdown treatment according to a specific temperature value. The walking of the loader, the ascending and descending of the main platform, the ascending and descending of the bridge platform, and the driving of the cargo conveying on the main platform and the bridge platform may be realized by either electric or hydraulic driving, or both, which may be selected as needed.

As the above structure is adopted, the present invention has the advantages that the main platform and the bridge platform have the same docking height and are stably docked, the bridge platform is free from side tilting, the rotation of the guardrail is provided with detection, and the elevator is stable to step on.

## Claims

1. A loader, comprising:
a chassis (12); and
a vehicle PLC controller,
wherein the chassis (12) is provided with an automatic leveling device for a conveying platform, and wherein the automatic leveling device for the conveying platform comprises a main platform (1) and a bridge platform (2), wherein there is arranged an automatic leveling mechanism (3) between the main platform (1) and the bridge platform (2);
wherein the automatic leveling mechanism (3) comprises at least one baffle (4), a supporting plate (5), a low-level sensor (6), and an aligning sensor (7); wherein the at least one baffle (4) is arranged between the main platform (1) and the bridge platform (2); wherein the supporting plate (5) is arranged on the main platform (1), wherein one end of the supporting plate (5) is fixedly connected with the main platform (1), and wherein another end of the supporting plate (5) is exposed from the main platform (1) and disposed below the baffle (4), wherein the baffle (4) is hinged with the bridge platform (2), wherein two ends of the baffle (4) are free ends, wherein one end of the baffle (4) faces towards the supporting plate (5) and is fixedly provided with the low-level sensor (6);
wherein the aligning sensor (7) is arranged between the other end of the baffle (4) and the bridge platform (2), wherein one end of the aligning sensor (7) is fixedly connected with the bridge platform (2), and another end of the aligning sensor (7) is spaced apart from the baffle (4);
wherein the main platform (1) and the bridge platform (2) are each connected with the chassis (12) through a lifting mechanism (14); wherein the low-level sensor (6), the aligning sensor (7), and the lifting mechanism (14) are each coupled with the vehicle PLC controller;
wherein there is arranged a main platform-bridge platform connecting mechanism (60) between the main platform (1) and the bridge platform (2);
wherein the main platform-bridge platform connecting mechanism (60) comprises two connecting frames (61), two connecting plates (62), two connecting rollers (63), and two connecting shafts; wherein two sides of a rear end of the bridge platform (2) each comprise a connecting frame (61); wherein each connecting frame (61) is fixedly connected with the bridge platform (2); wherein each connecting frame (61) comprises a connecting open slot (64), wherein the connecting open slot (64) is arranged to be oriented towards an outside of the bridge platform (2);
wherein two sides of a front end of the main platform (1) are each provided with a connecting plate (62), wherein opposite faces of the two connecting plates (62) are each provided with a connecting roller (63); wherein one end of each connecting plate (62) is fixedly connected with the main platform (1), and another end of the connecting plate (62) is provided with a connecting shaft; wherein each connecting shaft is fixedly connected with the corresponding connecting plate (62); wherein the connecting rollers (63) are movably installed on the respective connecting shafts, and wherein in response to the main platform (1) rising to be flush with the bridge platform (2), the connecting rollers (63) are configured to enter the respective connecting open slots (64), and wherein an outer surface of each connecting roller (63) is in an interference connection with a side wall of the respective connecting open slot (64).

2. The loader according to claim 1, wherein there is arranged a following sensor (9) on one side of the aligning sensor (7), wherein one end of the following sensor (9) is fixedly connected with the bridge platform (2), and wherein another end of the following sensor (9) is arranged to face towards the baffle (4), wherein a height of the following sensor (9) is greater than a height of the aligning sensor (7).

3. The loader according to claim 1 or 2, wherein there is arranged a high-level sensor (8) on one side of the aligning sensor (7), wherein one end of the high-level sensor (8) is fixedly connected with the bridge platform (2), and another end of the high-level sensor (8) is arranged to face towards the baffle (4), and wherein a height of the high-level sensor (8) is less than the height of the aligning sensor (7).

4. The loader according to claim 3, wherein there is arranged an ultra-high shutdown protection sensor (10) on one side of the aligning sensor (7), wherein one end of the ultra-high shutdown protection sensor (10) is fixedly connected with the bridge platform (2), and wherein another end of the ultra-high shutdown protection sensor (10) is arranged to face towards the baffle (4), wherein a height of the ultra-high shutdown protection sensor (10) is less than the height of the aligning sensor (7).

5. The loader according to claim 1 or 2 or 4, wherein there is arranged a baffle lowering sensor (11) on one side of the aligning sensor (7), wherein one end of the baffle lowering sensor (11) is fixedly connected with the bridge platform (2), and wherein another end of the baffle lowering sensor (11) is arranged to face towards the baffle (4), wherein a height of the baffle lowering sensor (11) is higher than the height of the aligning sensor (7).

6. The loader according to claim 1, wherein the main platform (1) is provided with a conveying motor, a chain, a chain wheel, a conveying roller, a roller shaft, and a motor controller; wherein the bridge platform (2) is provided with a conveying motor, a chain, a chain wheel, a conveying roller, a roller shaft, and a motor controller; wherein the main platform (1) and the bridge platform (2) are each provided with a roller shaft arranged at intervals, wherein two ends of each roller shaft are fixedly connected with the main platform (1) or the bridge platform (2) through a bearing, wherein the conveying roller is mounted on the roller shafts, wherein an output shaft of the conveying motor is connected with respective roller shaft through the chain and the chain wheel, wherein the conveying motor is connected with the motor controller, wherein the conveying motor and the motor controller are fixed on the main platform (1) or the bridge platform (2), and the motor controller is connected with the vehicle PLC controller.

7. The loader according to claim 1, wherein one side of the bridge platform (2) is provided with an operating board (13), another side of the bridge platform (2) is provided with a bridge platform side-tilting prevention mechanism (16), the bridge platform side-tilting prevention mechanism (16) comprises a hook (17) and a guide supporting plate, the hook (17) is arranged below the other side of the bridge platform (2), a lower end of the hook (17) is hinged with a roller shaft of the lifting mechanism (14) at a lower end of the bridge platform (2), an upper part of the hook (17) is provided with a guide supporting plate facing the roller shaft, an upper end of the guide supporting plate is butted against and slidably connected with the hook (17), and the guide supporting plate is fixedly connected with the bridge platform (2).

8. The loader according to claim 7, wherein the hook (17) comprises a connecting block (20) and a sliding pole (21), an upper end of the connecting block (20) is provided with the sliding pole (21), a lower end of the connecting block (20) is hinged with the roller shaft, one end of the sliding pole (21) is fixedly connected with the connecting block (20), the other end of the sliding pole (21) is draped on an upper end face of the guide supporting plate (18), and the sliding pole (21) is slidably connected with the guide supporting plate (18).

9. The loader according to claim 1, wherein one side of the bridge platform (2) is provided with an elevator (22), the elevator (22) comprises an upper ladder (23), a floating ladder (24) and a lower ladder (25), the upper ladder (23) is fixedly connected with the bridge platform (2), two sides of a lower part of the upper ladder (23) are respectively provided with a hanging plate (26), the hanging plate (26) is fixedly connected with the upper ladder (23), and a hanging groove (27) with an upward opening is formed between the hanging plate (26) and the upper ladder (23), two sides of a lower end of the upper ladder (23) are respectively provided with a pressing block (28), the pressing block (28) is located below the hanging plate (26), one end of the pressing block (28) is fixedly connected with the upper ladder (23), the other end of the pressing block (28) is arranged outside the upper ladder (23) to form a pressing end, one side of the upper ladder (23) far from the bridge platform (2) is provided with the floating ladder (24) and the lower ladder (25) at intervals, the lower ladder (25) is fixedly connected with the chassis (12), ladder slideways (29) are fixedly arranged on both sides of an upper part of the lower ladder (25), the floating ladder (24) is located between the upper ladder (23) and the lower ladder (25), the floating ladder (24) is slidably connected with the lower ladder (25) through the ladder slideways (29), two sides of an upper end of the floating ladder (24) are respectively provided with a clamping hook plate (30), two sides of a lower end of the floating ladder (24) are respectively provided with a stopping block (31), one end of the clamping hook plate (30) is fixedly connected with the floating ladder (24), the other end of the clamping hook plate (30) extends to a direction of the upper ladder (23) to form a hanging end, the clamping hook plate (30) is clamped into the hanging groove (27) to connect the floating ladder (24) with the upper ladder (23), one end of the stopping block (31) is fixedly connected with the floating ladder (24), the other end of the stopping block (31) extends to the direction of the upper ladder (23) to form a bearing end, the upper ladder (23) is downward, and the pressing block (28) is pressed on the stopping block (31) to drive the floating ladder (24) to descend.

10. The loader according to claim 9, wherein a fixed mounting frame (32) is arranged between the upper ladder (23) and the bridge platform (2), one end of the fixed mounting frame (32) is fixedly connected with the upper ladder (23), the other end of the fixed mounting frame (32) is fixedly connected with the bridge platform (2), two sides of the lower ladder (25) are respectively provided with a fixed supporting frame (33), one end of the fixed supporting frame (33) is fixedly connected with the lower ladder (25) and the other end of the fixed supporting frame (33) is fixedly connected with the chassis (12).

11. The loader according to claim 1, wherein the bridge platform (2) is provided with a rotary guardrail (39), the rotary guardrail (39) is rotatably connected with the bridge platform (2), a guardrail rotation detection mechanism (45) is arranged between the rotary guardrail (39) and the bridge platform (2), the guardrail rotation detection mechanism (45) comprises an inductor (46) and a sensing plate (47), the inductor (46) is arranged below the rotary guardrail (39), the sensing plate (47) is arranged on the rotary guardrail (39), a lower end of the inductor (46) is fixedly connected with the bridge platform (2), the inductor (46) is connected with the vehicle PLC controller, the sensing plate (47) is fixedly connected with the rotary guardrail (39), and when the rotary guardrail (39) rotates to a rear part of the bridge platform (2), the sensing plate (47) is located above the inductor (46) and induced by the inductor (46).

12. The loader according to claim 11, wherein the rotary guardrail (39) is provided with a movable guardrail (50), the movable guardrail (50) is slidably connected with the rotary guardrail (39), and the movable guardrail (50) is limited and fixed with the rotary guardrail (39) through a positioning pin (52).

13. The loader according to claim 12, wherein a movable guardrail support guide sliding mechanism (53) is arranged below the movable guardrail (50), and the movable guardrail support guide sliding mechanism (53) comprises a supporting roller (54), a supporting roller shaft (55) and a supporting roller seat (56), an upper end face of the supporting roller (54) butts against a lower end face of the movable guardrail (50), the supporting roller (54) is movably mounted on the supporting roller shaft (55), the supporting roller shaft (55) is installed on the supporting roller seat (56), and the supporting roller seat (56) is fixedly connected with the rotary guardrail (39) through a bracket.

14. The loader according to claim 12 or 13, wherein the rotary guardrail (39) is provided with a movable guardrail downward-pressing guide mechanism (57), the movable guardrail downward-pressing guide mechanism (57) comprises a guide roller (58) and a guide roller shaft, the rotary guardrail (39) is fixedly provided with a guardrail slideway, the movable guardrail (50) comprises a guardrail rod (59), the guardrail rod (59) is arranged in the guardrail slideway and slidably connected with the rotary guardrail (39), the guide roller shaft is arranged above the guardrail rod (59), the guide roller (58) is movably mounted on the guide roller shaft, a lower end face of the guide roller (58) butts against an upper end face of the guardrail rod (59), and the guide roller (58) shaft is fixedly connected with the rotary guardrail (39).

15. The loader according to claim 11 or 12 or 13, wherein the rotary guardrail (39) comprises a guardrail frame (42), a rotating rod (43) and a supporting rod (44), a front side of the guardrail frame (42) is provided with the supporting rod (44), a rear side of the guardrail frame (42) is provided with the rotating rod (43), an upper part of the rotating rod (43) is fixedly connected with the guardrail frame (42), a lower end of the rotating rod (43) is rotatably connected with the bridge platform (2), an upper end of the supporting rod (44) is fixedly connected with the guardrail frame (42), a lower end of the supporting rod (44) is arranged below the guardrail frame (42), a bolt (41) is arranged on the supporting rod (44), a side edge of the bridge platform (2) is provided with a first rod hole, the rear end of the bridge platform (2) is provided with a second rod hole, the bolt (41) cooperates with the first rod hole to fix the guardrail frame (42) at the side edge of the bridge platform (2), and the bolt (41) cooperates with the second rod hole to fix the guardrail frame (42) at a rear end of the bridge platform (2).

16. The loader according to claim 15, wherein the bridge platform (2) is provided with a rotating rod jack, and a lower end of the rotating rod (43) is arranged in the rotating rod jack and movably connected with the bridge platform (2).

## Patentansprüche

1. Lader; umfassend:
ein Fahrgestell (12); und
einen Fahrzeug-SPS-Controller,
wobei das Fahrgestell (12) mit einer automatischen Nivelliervorrichtung für eine Förderplattform ausgestattet ist und wobei die automatische Nivelliervorrichtung für die Förderplattform eine Hauptplattform (1) und eine Brückenplattform (2) umfasst, wobei zwischen der Hauptplattform (1) und der Brückenplattform (2) ein automatischer Nivelliermechanismus (3) angeordnet ist;
wobei der automatische Nivelliermechanismus (3) mindestens eine Prallplatte (4), eine Stützplatte (5), einen Niedrigstandsensor (6) und einen Ausrichtungssensor (7) umfasst, wobei die mindestens eine Prallplatte (4) zwischen der Hauptplattform (1) und der Brückenplattform (2) angeordnet ist, wobei die Stützplatte (5) auf der Hauptplattform (1) angeordnet ist, wobei ein Ende der Stützplatte (5) fest mit der Hauptplattform (1) verbunden ist und ein anderes Ende der Stützplatte (5) aus der Hauptplattform (1) herausragt und unterhalb der Prallplatte (4) angeordnet ist; wobei die Prallplatte (4) gelenkig mit der Brückenplattform (2) verbunden ist; wobei beide Enden der Prallplatte (4) freie Enden sind, wobei ein Ende der Prallplatte (4) zur Stützplatte (5) hin ausgerichtet ist und fest mit dem Niedrigstandsensor (6) versehen ist;
wobei der Ausrichtungssensor (7) zwischen dem anderen Ende der Prallplatte (4) und der Brückenplattform (2) angeordnet ist; wobei ein Ende des Ausrichtungssensors (7) fest mit der Brückenplattform (2) verbunden ist und das andere Ende des Ausrichtungssensors (7) von der Prallplatte (4) beabstandet ist;
wobei die Hauptplattform (1) und die Brückenplattform (2) jeweils über einen Hubmechanismus (14) mit dem Fahrgestell (12) verbunden sind; wobei der Niedrigstandsensor (6), der Ausrichtungssensor (7) und der Hubmechanismus (14) jeweils mit dem Fahrzeug-SPS-Controller gekoppelt sind;
wobei zwischen der Hauptplattform (1) und der Brückenplattform (2) ein Hauptplattform-Brückenplattform-Verbindungsmechanismus (60) angeordnet ist;
wobei der Hauptplattform-Brückenplattform-Verbindungsmechanismus (60) zwei Verbindungsrahmen (61), zwei Verbindungsplatten (62), zwei Verbindungsrollen (63) und zwei Verbindungswellen umfasst; wobei zwei Seiten eines hinteren Endes der Brückenplattform (2) jeweils einen Verbindungsrahmen (61) aufweisen; wobei jeder Verbindungsrahmen (61) fest mit der Brückenplattform (2) verbunden ist; wobei jeder Verbindungsrahmen (61) einen offenen Verbindungsschlitz (64) umfasst, wobei der offene Verbindungsschlitz (64) so angeordnet ist, dass er zur Außenseite der Brückenplattform (2) hin ausgerichtet ist;
wobei zwei Seiten eines vorderen Endes der Hauptplattform (1) jeweils mit einer Verbindungsplatte (62) versehen sind, wobei gegenüberliegende Flächen der beiden Verbindungsplatten (62) jeweils mit einer Verbindungsrolle (63) versehen sind; wobei ein Ende jeder Verbindungsplatte (62) fest mit der Hauptplattform (1) verbunden ist und ein anderes Ende der Verbindungsplatte (62) mit einer Verbindungswelle versehen ist; wobei jede Verbindungswelle fest mit der entsprechenden Verbindungsplatte (62) verbunden ist; wobei die Verbindungsrollen (63) beweglich auf den jeweiligen Verbindungswellen installiert sind, und wobei, wenn sich die Hauptplattform (1) anhebt und bündig mit der Brückenplattform (2) ist, die Verbindungsrollen (63) dazu ausgebildet sind, in die jeweiligen offenen Verbindungsschlitze (64) einzutreten, und wobei eine Außenfläche jeder Verbindungsrolle (63) in einer Übermaßverbindung mit einer Seitenwand des jeweiligen offenen Verbindungsschlitzes (64) steht.

2. Lader nach Anspruch 1, wobei auf einer Seite des Ausrichtungssensors (7) ein Folgesensor (9) angeordnet ist, wobei ein Ende des Folgesensors (9) fest mit der Brückenplattform (2) verbunden ist und ein anderes Ende des Folgesensors (9) zur Prallplatte (4) hin ausgerichtet ist, wobei eine Höhe des Folgesensors (9) größer ist als eine Höhe des Ausrichtungssensors (7).

3. Lader nach Anspruch 1 oder 2, wobei auf einer Seite des Ausrichtungssensors (7) ein Hochstandssensor (8) angeordnet ist, wobei ein Ende des Hochstandssensors (8) fest mit der Brückenplattform (2) verbunden ist und ein anderes Ende des Hochstandssensors (8) derart angeordnet ist, dass es zur Prallplatte (4) hin ausgerichtet ist, und wobei eine Höhe des Hochstandssensors (8) kleiner ist als die Höhe des Ausrichtungssensors (7).

4. Lader nach Anspruch 3, wobei auf einer Seite des Ausrichtungssensors (7) ein Ultrahoch-Abschalt-Schutzsensor (10) angeordnet ist, wobei ein Ende des Ultrahoch-Abschalt-Schutzsensors (10) fest mit der Brückenplattform (2) verbunden ist und ein anderes Ende des Ultra-Hoch-Abschalt-Schutzsensors (10) derart angeordnet ist, dass es zur Prallplatte (4) hin ausgerichtet ist, wobei eine Höhe des Ultra-Hoch-Abschalt-Schutzsensors (10) kleiner ist als die Höhe des Ausrichtungssensors (7).

5. Lader nach Anspruch 1 oder 2 oder 4, wobei auf einer Seite des Ausrichtungssensors (7) ein Prallplatten-Absenksensor (11) angeordnet ist, wobei ein Ende des Prallplatten-Absenksensors (11) fest mit der Brückenplattform (2) verbunden ist und ein anderes Ende des Prallplatten-Absenksensors (11) derart angeordnet ist, dass es zur Prallplatte (4) hin ausgerichtet ist, wobei eine Höhe des Prallplatten-Absenksensors (11) höher ist als die Höhe des Ausrichtungssensors (7).

6. Lader gemäß Anspruch 1, wobei die Hauptplattform (1) mit einem Förderungsmotor, einer Kette, einem Kettenrad, einer Förderungsrolle, einer Rollenwelle und einem Motorcontroller ausgestattet ist; wobei die Brückenplattform (2) mit einem Förderungsmotor, einer Kette, einem Kettenrad, einer Förderungsrollen, einer Rollenwelle und einem Motorcontroller ausgestattet ist, wobei die Hauptplattform (1) und die Brückenplattform (2) jeweils mit einer im Abstand angeordneten Rollenwelle versehen sind, wobei zwei Enden jeder Rollenwelle fest mit der Hauptplattform (1) oder der Brückenplattform (2) durch ein Lager verbunden sind, wobei die Förderungsrollen auf den Rollenwellen montiert sind, wobei eine Ausgangswelle des Förderungsmotors mit der jeweiligen Rollenwelle durch die Kette und das Kettenrad verbunden ist, wobei der Förderungsmotor mit dem Motorcontroller verbunden ist, wobei der Förderungsmotor und der Motorcontroller auf der Hauptplattform (1) oder der Brückenplattform (2) befestigt sind und der Motorcontroller mit dem Fahrzeug-SPS-Controller verbunden ist.

7. Lader nach Anspruch 1, wobei eine Seite der Brückenplattform (2) mit einer Bedientafel (13) versehen ist und eine andere Seite der Brückenplattform (2) mit einem Seiten-Kippschutzmechanismus (16) der Brückenplattform ausgestattet ist, wobei der Seiten-Kippschutzmechanismus (16) der Brückenplattform einen Haken (17) und eine Führungsstützplatte umfasst, wobei der Haken (17) unter der anderen Seite der Brückenplattform (2) angeordnet ist, wobei ein unteres Ende des Hakens (17) mit einer Rollenwelle des Hubmechanismus (14) an einem unteren Ende der Brückenplattform (2) gelenkig verbunden ist, wobei ein oberer Teil des Hakens (17) mit einer zur Rollenwelle weisenden Führungsstützplatte versehen ist, ein oberes Ende der Führungsstützplatte gegen den Haken (17) stößt und gleitend mit diesem verbunden ist, und die Führungsstützplatte fest mit der Brückenplattform (2) verbunden ist.

8. Lader nach Anspruch 7, wobei der Haken (17) einen Verbindungsblock (20) und eine Gleitstange (21) umfasst, wobei ein oberes Ende des Verbindungsblocks (20) mit der Gleitstange (21) versehen ist und ein unteres Ende des Verbindungsblocks (20) mit der Rollenwelle gelenkig verbunden ist, wobei ein Ende der Gleitstange (21) fest mit dem Verbindungsblock (20) verbunden ist und das andere Ende der Gleitstange (21) auf einer oberen Endfläche der Führungsstützplatte (18) aufliegt und die Gleitstange (21) gleitend mit der Führungsstützplatte (18) verbunden ist.

9. Lader nach Anspruch 1, wobei eine Seite der Brückenplattform (2) mit einem Aufzug (22) versehen ist, wobei der Aufzug (22) eine obere Leiter (23), eine schwimmende Leiter (24) und eine untere Leiter (25) umfasst, wobei die obere Leiter (23) fest mit der Brückenplattform (2) verbunden ist, wobei zwei Seiten eines unteren Teils der oberen Leiter (23) jeweils mit einer Aufhängeplatte (26) versehen sind, wobei die Aufhängeplatte (26) fest mit der oberen Leiter (23) verbunden ist und zwischen der Aufhängeplatte (26) und der oberen Leiter (23) eine Aufhängungsnut (27) mit einer nach oben offenen Öffnung ausgebildet ist, wobei zwei Seiten eines unteren Endes der oberen Leiter (23) jeweils mit einem Druckblock (28) versehen sind, wobei der Druckblock (28) unterhalb der Aufhängeplatte (26) angeordnet ist, wobei ein Ende des Druckblocks (28) fest mit der oberen Leiter (23) verbunden ist und das andere Ende des Druckblocks (28) außerhalb der oberen Leiter (23) angeordnet ist, um ein Druckende zu bilden, wobei an einer von der Brückenplattform (2) abgewandten Seite der oberen Leiter (23) die schwimmende Leiter (24) und die untere Leiter (25) in Abständen angeordnet sind, wobei die untere Leiter (25) fest mit dem Fahrgestell (12) verbunden ist, wobei an beiden Seiten eines oberen Teils der unteren Leiter (25) fest Leiter-Gleitführungen (29) angebracht sind, wobei die schwimmende Leiter (24) zwischen der oberen Leiter (23) und der unteren Leiter (25) angeordnet ist, wobei die schwimmende Leiter (24) gleitend mit der unteren Leiter (25) über die Leiter-Gleitführungen (29) verbunden ist, wobei zwei Seiten eines oberen Endes der schwimmenden Leiter (24) jeweils mit einer Klemmhakenplatte (30) versehen sind, wobei zwei Seiten eines unteren Endes der schwimmenden Leiter (24) jeweils mit einem Anschlagblock (31) versehen sind, wobei ein Ende der Klemmhakenplatte (30) fest mit der schwimmenden Leiter (24) verbunden ist und das andere Ende der Klemmhakenplatte (30) in Richtung der oberen Leiter (23) verläuft, um ein Aufhängeende zu bilden, wobei die Klemmhakenplatte (30) in die Aufhängungsnut (27) eingeklemmt wird, um die schwimmende Leiter (24) mit der oberen Leiter (23) zu verbinden, wobei ein Ende des Anschlagblocks (31) fest mit der schwimmenden Leiter (24) verbunden ist und das andere Ende des Anschlagblocks (31) in Richtung der oberen Leiter (23) verläuft, um ein Lagerende zu bilden, wobei die obere Leiter (23) nach unten bewegt und der Druckblock (28) auf den Anschlagblock (31) drückt, um die schwimmende Leiter (24) zum Absenken zu bewegen.

10. Lader nach Anspruch 9, wobei zwischen der oberen Leiter (23) und der Brückenplattform (2) ein fester Montagerahmen (32) angeordnet ist, wobei ein Ende des festen Montagerahmens (32) fest mit der oberen Leiter (23) verbunden ist und das andere Ende des festen Montagerahmens (32) fest mit der Brückenplattform (2) verbunden ist, wobei zwei Seiten der unteren Leiter (25) jeweils mit einem festen Stützrahmen (33) versehen sind, wobei ein Ende des festen Stützrahmens (33) fest mit der unteren Leiter (25) verbunden ist und das andere Ende des festen Stützrahmens (33) fest mit dem Fahrgestell (12) verbunden ist.

11. Lader nach Anspruch 1, wobei die Brückenplattform (2) mit einem drehbaren Schutzgeländer (39) versehen ist, wobei das drehbare Schutzgeländer (39) drehbar mit der Brückenplattform (2) verbunden ist, wobei eine Schutzgeländer-Dreherfassungsmechanik (45) zwischen dem drehbaren Schutzgeländer (39) und der Brückenplattform (2) angeordnet ist, wobei die Schutzgeländer-Dreherfassungsmechanik (45) einen Induktor (46) und eine Erfassungsplatte (47) umfasst, wobei der Induktor (46) unterhalb des drehbaren Schutzgeländers (39) angeordnet ist, wobei die Erfassungsplatte (47) am drehbaren Schutzgeländer (39) angebracht ist, wobei ein unteren Ende des Induktors (46) fest mit der Brückenplattform (2) verbunden ist, wobei der Induktor (46) mit dem Fahrzeug-SPS-Controller verbunden ist, wobei die Erfassungsplatte (47) fest mit dem drehbaren Schutzgeländer (39) verbunden ist, und wobei, wenn sich das drehbare Schutzgeländer (39) zu einem hinteren Teil der Brückenplattform (2) dreht, die Erfassungsplatte (47) oberhalb des Induktors (46) angeordnet ist und von diesem erfasst wird.

12. Lader nach Anspruch 11, **dadurch gekennzeichnet, dass** das drehbare Schutzgeländer (39) mit einem beweglichen Schutzgeländer (50) versehen ist, wobei das bewegliche Schutzgeländer (50) gleitend mit dem drehbaren Schutzgeländer (39) verbunden ist, und wobei das bewegliche Schutzgeländer (50) mittels eines Positionsstifts (52) am drehbaren Schutzgeländer (39) begrenzt und fixiert ist.

13. Lader nach Anspruch 12, wobei unterhalb des beweglichen Schutzgeländers (50) ein Trägerführungsgleitmechanismus (53) für das bewegliche Schutzgeländer angeordnet ist und der Trägerführungsgleitmechanismus (53) für das bewegliche Schutzgeländer eine Tragrolle (54), eine Tragrollenwelle (55) und einen Tragrollensitz (56) umfasst, wobei eine obere Stirnfläche der Tragrolle (54) an einer unteren Stirnfläche des beweglichen Schutzgeländers (50) anliegt, wobei die Tragrolle (54) beweglich auf der Tragrollenwelle (55) montiert ist, die Tragrollenwelle (55) auf dem Tragrollensitz (56) installiert ist und der Tragrollensitz (56) über eine Halterung fest mit dem drehbaren Schutzgeländer (39) verbunden ist.

14. Lader nach Anspruch 12 oder 13, wobei das drehbare Geländer (39) einen Führungsmechanismus (57) zum Abwärts-Andrücken des beweglichen Geländers aufweist, wobei der Führungsmechanismus (57) zum Abwärts-Andrücken des beweglichen Geländers eine Führungsrolle (58) und eine Führungsrollenwelle umfasst, wobei das drehbare Schutzgeländer (39) fest mit einem Schutzgeländer-Gleitbahn ausgestattet ist, wobei das bewegliche Schutzgeländer (50) eine Schutzgeländerstange (59) umfasst, wobei die Schutzgeländerstange (59) im Schutzgeländer-Gleitbahn angeordnet und gleitend mit dem drehbaren Schutzgeländer (39) verbunden ist, wobei die Führungsrollenwelle oberhalb der Schutzgeländerstange (59) angeordnet ist, wobei die Führungsrolle (58) beweglich auf der Führungsrollenwelle montiert ist, eine untere Stirnfläche der Führungsrolle (58) an einer oberen Stirnfläche der Schutzgeländerstange (59) anliegt und die Führungsrollenwelle fest mit dem drehbaren Schutzgeländer (39) verbunden ist.

15. Lader nach Anspruch 11 oder 12 oder 13, wobei das drehbare Schutzgeländer (39) einen Schutzgeländerrahmen (42), eine Drehstange (43) und eine Stützstange (44) umfasst, wobei eine Vorderseite des Schutzgeländerrahmens (42) mit der Stützstange (44) versehen ist, eine Rückseite des Schutzgeländerrahmens (42) mit der Drehstange (43) versehen ist, ein oberer Teil der Drehstange (43) fest mit dem Schutzgeländerrahmen (42) verbunden ist, ein unteres Ende der Drehstange (43) drehbar mit der Brückenplattform (2) verbunden ist, ein oberes Ende der Stützstange (44) fest mit dem Schutzgeländerrahmen (42) verbunden ist, ein unteres Ende der Stützstange (44) unterhalb des Schutzgeländerrahmens (42) angeordnet ist, ein Bolzen (41) an der Stützstange (44) angebracht ist, eine Seitenkante der Brückenplattform (2) mit einem ersten Stangenloch versehen ist, das hintere Ende der Brückenplattform (2) mit einem zweiten Stangenloch versehen ist, der Bolzen (41) mit dem ersten Stangenloch zusammenwirkt, um den Schutzgeländerrahmen (42) an der Seitenkante der Brückenplattform (2) zu befestigen, und der Bolzen (41) mit dem zweiten Stangenloch zusammenwirkt, um den Schutzgeländerrahmen (42) an einem hinteren Ende der Brückenplattform (2) zu befestigen.

16. Lader nach Anspruch 15, wobei die Brückenplattform (2) mit einer Drehstangen-Aufnahme versehen ist, und wobei das untere Ende der Drehstange (43) in der Drehstangen-Aufnahme angeordnet und beweglich mit der Brückenplattform (2) verbunden ist.

## Revendications

1. Chargeur, comprenant :
un châssis (12) ; et
un contrôleur PLC de véhicule,
dans lequel le châssis (12) est pourvu d'un dispositif de nivellement automatique pour une plate-forme de transport, et dans lequel le dispositif de nivellement automatique pour la plate-forme de transport comprend une plate-forme principale (1) et une plate-forme de pont (2), dans lequel un mécanisme de nivellement automatique (3) est disposé entre la plate-forme principale (1) et la plate-forme de pont (2) ;
dans lequel le mécanisme de nivellement automatique (3) comprend au moins un déflecteur (4), une plaque de support (5), un capteur de bas niveau (6), et un capteur d'alignement (7), dans lequel l'au moins un déflecteur (4) sont disposé entre la plate-forme principale (1) et la plate-forme de pont (2), dans lequel la plaque de support (5) est disposée sur la plate-forme principale (1), dans lequel une extrémité de la plaque de support (5) est reliée de manière fixe à la plate-forme principale (1) ; et dans lequel l'autre extrémité de la plaque de support (5) est exposée de la plate-forme principale (1) et disposée au-dessous du déflecteur (4) ; dans lequel le déflecteur (4) est articulé à la plate-forme de pont (2) ; dans lequel deux extrémités du déflecteur (4) sont des extrémités libres ; dans lequel une extrémité du déflecteur (4) est fait face à la plaque de support (5) et est pourvu de manière fixe du capteur de bas niveau (6) ;
dans lequel le capteur d'alignement (7) est disposé entre l'autre extrémité du déflecteur (4) et la plate-forme de pont (2) ; dans lequel une extrémité du capteur d'alignement (7) est reliée de manière fixe à la plate-forme de pont (2) ; et l'autre extrémité du capteur d'alignement (7) est éloignée du déflecteur (4) ;
dans lequel la plate-forme principale (1) et la plate-forme de pont (2) sont chacune reliées au châssis (12) par l'intermédiaire d'un mécanisme de levage (14) ; dans lequel le capteur de bas niveau (6), le capteur d'alignement (7) et le mécanisme de levage (14) sont chacun couplés au contrôleur PLC de véhicule ;
dans lequel un mécanisme de liaison de plate-forme principale et plate-forme de pont (60) est disposé entre la plate-forme principale (1) et la plate-forme de pont (2) ;
dans lequel le mécanisme de liaison de plate-forme principale et plate-forme de pont (60) comprend deux cadres de liaison (61), deux plaques de liaison (62), deux rouleaux de liaison (63) et deux arbres de liaison ; dans lequel deux côtés d'une extrémité arrière de la plate-forme de pont (2) comprennent chacun un cadre de liaison (61) ; dans lequel chaque cadre de liaison (61) est relié de manière fixe à la plate-forme de pont (2) ; dans lequel chaque cadre de liaison (61) comprend une fente ouverte de liaison (64), dans lequel la fente ouverte de liaison (64) est disposée pour être orientée vers un extérieur de la plate-forme de pont (2) ;
dans lequel deux côtés d'une extrémité avant de la plate-forme principale (1) sont chacun pourvus d'une plaque de liaison (62), dans lequel des faces opposées des deux plaques de liaison (62) sont chacune pourvues d'un rouleau de liaison (63) ; dans lequel une extrémité de chaque plaque de liaison (62) est reliée de manière fixe à la plate-forme principale (1), et l'autre extrémité de la plaque de liaison (62) est pourvue d'un arbre de liaison ; dans lequel chaque arbre de liaison est relié de manière fixe à la plaque de liaison (62) correspondante ; dans lequel les rouleaux de liaison (63) sont montés de manière mobile sur les arbres de liaison respectifs, et dans lequel en réponse à la montée de la plate-forme principale (1) pour affleurer la plate-forme de pont (2), les rouleaux de liaison (63) sont configurés pour entrer dans les fentes ouvertes de liaison (64) respectives, et dans lequel une surface externe de chaque rouleau de liaison (63) est en liaison d'interférence avec une paroi latérale de la fente ouverte de liaison (64) respective.

2. Chargeur selon la revendication 1, dans lequel un capteur suiveur (9) est disposé sur un côté du capteur d'alignement (7), dans lequel une extrémité du capteur suiveur (9) est reliée de manière fixe à la plate-forme de pont (2), et dans lequel l'autre extrémité du capteur suiveur (9) est disposée pour faire face au déflecteur (4), dans lequel une hauteur du capteur suiveur (9) est supérieure à une hauteur du capteur d'alignement (7).

3. Chargeur selon la revendication 1 ou 2, dans lequel un capteur de haut niveau (8) est disposé sur un côté du capteur d'alignement (7), dans lequel une extrémité du capteur de haut niveau (8) est reliée de manière fixe à la plate-forme de pont (2), et l'autre extrémité du capteur de haut niveau (8) est disposée pour faire face au déflecteur (4), et dans lequel une hauteur du capteur de haut niveau (8) est inférieure à une hauteur du capteur d'alignement (7).

4. Chargeur selon la revendication 3, dans lequel un capteur de protection par arrêt ultra-haut (10) est disposé sur un côté du capteur d'alignement (7), dans lequel une extrémité du capteur de protection par arrêt ultra-haut (10) est reliée de manière fixe à la plate-forme de pont (2), et dans lequel l'autre extrémité du capteur de protection par arrêt ultra-haut (10) est disposée pour faire face au déflecteur (4), dans lequel une hauteur du capteur de protection par arrêt ultra-haut (10) est inférieure à une hauteur du capteur d'alignement (7).

5. Chargeur selon la revendication 1 ou 2 ou 4, dans lequel un capteur d'abaissement de déflecteur (11) est disposé sur un côté du capteur d'alignement (7), dans lequel une extrémité du capteur d'abaissement de déflecteur (11) est reliée de manière fixe à la plate-forme de pont (2), et dans lequel l'autre extrémité du capteur d'abaissement de déflecteur (11) est disposée pour faire face au déflecteur (4), dans lequel une hauteur du capteur d'abaissement de déflecteur (11) est supérieure à une hauteur du capteur d'alignement (7).

6. Chargeur selon la revendication 1, dans lequel la plate-forme principale (1) est pourvue d'un moteur de convoyage, d'une chaîne, d'une roue à chaîne, d'un rouleau de convoyage, d'un arbre de rouleau et d'un contrôleur de moteur ; dans lequel la plate-forme de pont (2) est pourvue d'un moteur de convoyage, d'une chaîne, d'une roue à chaîne, d'un rouleau de convoyage, d'un arbre de rouleau et d'un contrôleur de moteur, dans lequel la plate-forme principale (1) et la plate-forme de pont (2) sont chacune pourvues d'un arbre de rouleau disposé à intervalles, dans lequel deux extrémités de chaque arbre de rouleau sont reliées de manière fixes à la plate-forme principale (1) ou à la plate-forme de pont (2) par l'intermédiaire d'un palier, dans lequel le rouleau de convoyage est monté sur les arbres de rouleau, dans lequel un arbre de sortie du moteur de convoyage est relié à l'arbre de rouleau respectif par l'intermédiaire de la chaîne et de la roue à chaîne, dans lequel le moteur de convoyage est relié au contrôleur de moteur, dans lequel le moteur de convoyage et le contrôleur de moteur sont fixés sur la plate-forme principale (1) ou la plate-forme de pont (2), et le contrôleur de moteur est reliée au contrôleur PLC de véhicule.

7. Chargeur selon la revendication 1, dans lequel un côté de la plate-forme de pont (2) est pourvu d'un tableau de commande (13), l'autre côté de la plate-forme de pont (2) est pourvu d'un mécanisme de prévention contre basculement latéral de plate-forme de pont (16), le mécanisme de prévention contre basculement latéral de plate-forme de pont (16) comprend un crochet (17) et une plaque de support de guidage, le crochet (17) est disposé sous l'autre côté de la plate-forme de pont (2), une extrémité inférieure du crochet (17) est articulée avec un arbre de rouleau du mécanisme de levage (14) à une extrémité inférieure de la plate-forme de pont (2), une partie supérieure du crochet (17) est pourvue d'une plaque de support de guidage faisant face à l'arbre de rouleau, une extrémité supérieure de la plaque de support de guidage s'appuie contre et est reliée de manière coulissante au crochet (17), et la plaque de support de guidage est reliée de manière fixe à la plate-forme de pont (2).

8. Chargeur selon la revendication 7, dans lequel le crochet (17) comprend un bloc de liaison (20) et une tige coulissante (21), une extrémité supérieure du bloc de liaison (20) est pourvue de la tige coulissante (21), une extrémité inférieure du bloc de liaison (20) est articulée avec l'arbre de rouleau, une extrémité de la tige coulissante (21) est reliée de manière fixe au bloc de liaison (20), l'autre extrémité de la tige coulissante (21) est recouverte sur une face d'extrémité supérieure de la plaque de support de guidage (18), et la tige coulissante (21) est reliée de manière coulissante à la plaque de support de guidage (18).

9. Chargeur selon la revendication 1, dans lequel un côté de la plate-forme de pont (2) est pourvu d'un élévateur (22), l'élévateur (22) comprend une échelle supérieure (23), une échelle flottante (24) et une échelle inférieure (25), l'échelle supérieure (23) est reliée de manière fixe à la plate-forme de pont (2), deux côtés d'une partie inférieure de l'échelle supérieure (23) sont pourvus respectivement d'une plaque de suspension (26), la plaque de suspension (26) est reliée de manière fixe à l'échelle supérieure (23), et une rainure de suspension (27) ayant une ouverture vers le haut est formée entre la plaque de suspension (26) et l'échelle supérieure (23), deux côtés d'une extrémité inférieure de l'échelle supérieure (23) sont pourvus respectivement d'un bloc de pression (28), le bloc de pression (28) est situé sous la plaque de suspension (26), une extrémité du bloc de pression (28) est reliée de manière fixe à l'échelle supérieure (23), l'autre extrémité du bloc de pression (28) est disposée à l'extérieur de l'échelle supérieure (23) pour former une extrémité de pression, un côté de l'échelle supérieure (23) éloigné de la plate-forme de pont (2) est pourvu de l'échelle flottante (24) et de l'échelle inférieure (25) à intervalles, l'échelle inférieure (25) est reliée de manière fixe au châssis (12), des coulisses d'échelle (29) sont disposées de manière fixe sur deux côtés d'une partie supérieure de l'échelle inférieure (25), l'échelle flottante (24) est située entre l'échelle supérieure (23) et l'échelle inférieure (25), l'échelle flottante (24) est reliée de manière coulissante à l'échelle inférieure (25) par l'intermédiaire des coulisses d'échelle (29), deux côtés d'une extrémité supérieure de l'échelle flottante (24) sont pourvus respectivement d'une plaque à crochet de serrage (30), deux côtés d'une extrémité inférieure de l'échelle flottante (24) sont pourvus respectivement d'un bloc d'arrêt (31), une extrémité de la plaque à crochet de serrage (30) est reliée de manière fixe à l'échelle flottante (24), l'autre extrémité de la plaque à crochet de serrage (30) s'étend en direction de l'échelle supérieure (23) pour former une extrémité de suspension, la plaque à crochet de serrage (30) est serrée dans la rainure de suspension (27) pour relier l'échelle flottante (24) à l'échelle supérieure (23), une extrémité du bloc d'arrêt (31) est reliée de manière fixe à l'échelle flottante (24), l'autre extrémité du bloc d'arrêt (31) s'étend en direction de l'échelle supérieure (23) pour former une extrémité portante, l'échelle supérieure (23) est vers le bas, et le bloc de pression (28) est pressé sur le bloc d'arrêt (31) pour entraîner l'échelle flottante (24) à descendre.

10. Chargeur selon la revendication 9, dans lequel un cadre de montage fixe (32) est disposé entre l'échelle supérieure (23) et la plate-forme de pont (2), une extrémité du cadre de montage fixe (32) est reliée de manière fixe à l'échelle supérieure (23), l'autre extrémité du cadre de montage fixe (32) est reliée de manière fixe à la plate-forme de pont (2), deux côtés de l'échelle inférieure (25) sont pourvus respectivement d'un cadre de support fixe (33), une extrémité du cadre de support fixe (33) est reliée de manière fixe à l'échelle inférieure (25) et l'autre extrémité du cadre de support fixe (33) est reliée de manière fixe au châssis (12).

11. Chargeur selon la revendication 1, dans lequel la plate-forme de pont (2) est pourvue d'une rambarde rotative (39), la rambarde rotative (39) est reliée de manière rotative à la plate-forme de pont (2), un mécanisme de détection de rotation de rambarde (45) est disposé entre la rambarde rotative (39) et la plate-forme de pont (2), le mécanisme de détection de rotation de rambarde (45) comprend un inducteur (46) et une plaque de détection (47), l'inducteur (46) est disposé sous la rambarde rotative (39), la plaque de détection (47) est disposée sur la rambarde rotative (39), une extrémité inférieure de l'inducteur (46) est reliée de manière fixe à la plate-forme de pont (2), l'inducteur (46) est relié au contrôleur PLC de véhicule, la plaque de détection (47) est reliée de manière fixe à la rambarde rotative (39), et lorsque la rambarde rotative (39) tourne vers une partie arrière de la plate-forme de pont (2), et la plaque de détection (47) est située au-dessus de l'inducteur (46) et est induite par l'inducteur (46).

12. Chargeur selon la revendication 11, dans lequel la rambarde rotative (39) est pourvue d'une rambarde mobile (50), la rambarde mobile (50) est reliée de manière coulissante à la rambarde rotative (39), et la rambarde mobile (50) est limitée et fixée à la rambarde rotative (39) par l'intermédiaire d'une goupille de positionnement (52).

13. Chargeur selon la revendication 12, dans lequel un mécanisme coulissant de guidage de support de rambarde mobile (53) est disposé sous la rambarde mobile (50), et le mécanisme coulissant de guidage de support de rambarde mobile (53) comprend un rouleau de support (54), un arbre de rouleau de support (55) et un siège de rouleau de support (56), une face d'extrémité supérieure du rouleau de support (54) s'appuie contre une face d'extrémité inférieure de la rambarde mobile (50), le rouleau de support (54) est monté de manière mobile sur l'arbre de rouleau de support (55), l'arbre de rouleau de support (55) est installé sur le siège de rouleau de support (56), et le siège de rouleau de support (56) est fixé à la rambarde rotative (39) par l'intermédiaire d'un support.

14. Chargeur selon la revendication 12 ou 13, dans lequel la rambarde rotative (39) est pourvue d'un mécanisme de guidage de pression vers le bas de rambarde mobile (57), le mécanisme de guidage de pression vers le bas de rambarde mobile (57) comprend un rouleau de guidage (58) et un arbre de rouleau de guidage, la rambarde rotative (39) est pourvue de manière fixe d'une coulisse de rambarde, la rambarde mobile (50) comprend une tige de rambarde (59), la tige de rambarde (59) est disposée dans la coulisse de rambarde et reliée de manière coulissante à la rambarde rotative (39), l'arbre de rouleau de guidage est disposé au-dessus de la tige de rambarde (59), le rouleau de guidage (58) est monté de manière mobile sur l'arbre de rouleau de guidage, une face d'extrémité inférieure du rouleau de guidage (58) s'appuie contre une face d'extrémité supérieure de la tige de rambarde (59), et le rouleau de guidage (58) est relié de manière fixe à la rambarde rotative (39).

15. Chargeur selon la revendication 11 ou 12 ou 13, dans lequel la rambarde rotative (39) comprend un cadre de rambarde (42), une tige rotative (43) et une tige de support (44), un côté avant du cadre de rambarde (42) est pourvu de la tige de support (44), un côté arrière du cadre de rambarde (42) est pourvu de la tige rotative (43), une partie supérieure de la tige rotative (43) est reliée de manière fixe au cadre de rambarde (42), une extrémité inférieure de la tige rotative (43) est reliée de manière rotative à la plate-forme de pont (2), une extrémité supérieure de la tige de support (44) est reliée de manière fixe au cadre de rambarde (42), une extrémité inférieure de la tige de support (44) est disposée sous le cadre de rambarde (42), un boulon (41) est disposé sur la tige de support (44), un bord latéral de la plate-forme de pont (2) est pourvu d'un premier trou de tige, l'extrémité arrière de la plate-forme de pont (2) est pourvue d'un second trou de tige, le boulon (41) coopère avec le premier trou de tige pour fixer le cadre de rambarde (42) sur le bord latéral de la plate-forme de pont (2), et le boulon (41) coopère avec le second trou de tige pour fixer le cadre de rambarde (42) à une extrémité arrière de la plate-forme de pont (2).

16. Chargeur selon la revendication 15, dans lequel la plate-forme de pont (2) est pourvue d'un vérin à tige rotative, et une extrémité inférieure de la tige rotative (43) est disposée dans le vérin à tige rotative et reliée de manière mobile à la plate-forme de pont (2).
